# EUROPEAN PATENT APPLICATION

(11) **EP 4 775 539 A1**
(43) Date of publication of application: **15.07.2026**
(21) Application number: 24862702.8
(22) Date of filing: 29.08.2024
(51) Int. Cl.: C01C 1/00, B60J 1/00, C03C 17/40, C03C 27/12, G02B 5/22, G02B 5/26, G02B 5/28

(54) **VEHICLE WINDOWPANE**

(30) Priority: 07.09.2023 JP 2023145529
(71) Applicant: AGC Inc., Chiyoda-ku Tokyo 100-8405 (JP)
(72) Inventor: KIMURA, Shun, Tokyo 100-8405 (JP); KIMURA, Risa, Tokyo 100-8405 (JP); OIWAKE, Miyoko, Tokyo 100-8405 (JP)
(74) Representative: TBK
(86) International application number: PCT/JP2024/031066
(87) International publication number: WO 2025/053050

(57) **Abstract**

A vehicle window glass with which it is possible to realize a vehicle space that is favorable to the skin of the occupant is provided. In a vehicle window glass according to the present disclosure, an average transmittance A in a near-infrared wavelength band from 780 nm to 2,500 nm is 65% or less, a value B, which is a percentage (b1/b2×100) of b1 with respect to b2, is 50% or more, where b1 is an average transmittance in a visible-light long wavelength band of 650 nm to 750 nm, and b2 is an average transmittance in a visible-light total wavelength band of 380 nm to 780 nm, and the transmittance has a minimum value in the wavelength band of 500 nm to 600 nm.

## Description

### Technical Field

The present disclosure relates to a vehicle window glass.

### Background Art

In recent years, along with the progress of autonomous driving technologies and the trend of MaaS (Mobility as a Service), vehicles have been regarded not only as means for transportation but also as a moving living space for work, recreation, and residence. Therefore, it has been desired to provide a vehicle space aiming at the health and comfort of occupants of the vehicle.
Patent Literature 1 discloses a technology related to a light-controllable glass capable of changing the amount of transmitted light. The comfort of a vehicle space is improved by providing it with such a light-controllable glass. Further, for example, in order to prevent occupants of a vehicle from getting sunburned, a vehicle window glass through which ultraviolet rays do not easily pass has been developed (e.g., Patent Literature 2).

### Citation List

### Patent Literature

[Patent Literature 1] Published Japanese Translation of PCT International Publication for Patent Application, No. 2012-503123
[Patent Literature 2] Japanese Unexamined Patent Application Publication No. H6-345490

### Summary of Invention

### Technical Problem

Vehicle window glass has a function of controlling the wavelengths of sunlight that enter the vehicle. In order to enable occupants to be healthy and comfortable in a vehicle, it is important to appropriately control the wavelengths of sunlight that enter the vehicle.

For example, regarding the skin of the occupant, sunlight that enters a vehicle includes components having wavelengths that adversely affect the skin (such as ultraviolet rays), and includes components having wavelengths that favorably affect the skin. Further, there are components of sunlight having wavelengths that make the skin of the occupant look beautiful in the vehicle. That is, in order to realize a vehicle space that is favorable to the skin of the occupant, it is important to appropriately control the wavelengths of sunlight that enter the vehicle.

In view of the above-described problem, an object of the present disclosure is to provide a vehicle window glass with which it is possible to realize a vehicle space that is favorable to the skin of the occupant.

### Solution to Problem

[1] A vehicle window glass, wherein
   an average transmittance A in a near-infrared wavelength band from 780 nm to 2,500 nm is 65% or less;
   a value B, which is a percentage (b1/b2×100) of b1 with respect to b2 is 50% or more, where b1 is an average transmittance in a visible-light long wavelength band of 650 nm to 750 nm, and b2 is an average transmittance in a visible-light total wavelength band of 380 nm to 780 nm; and
   the transmittance has a minimum value in the wavelength band of 500 nm to 600 nm.
[2] The vehicle window glass according to Item [1], wherein
   the average transmittance A is 30% or less, and
   the value B is 90% or more.
[3] The vehicle window glass according to Item [1] or [2], wherein an average transmittance in an ultraviolet-light wavelength band shorter than 380 nm is less than 1%.
[4] The vehicle window glass according to any one of Items [1] to [3], wherein the average transmittance b1 of the visible-light long wavelength band is 30% or more.
[5] The vehicle window glass according to any one of Items [1] to [4], wherein the vehicle window glass is a laminated glass comprising:
   a first glass plate;
   a second glass plate; and
   an interlayer sandwiched between the first glass plate and the second glass plate.
[6] The vehicle window glass according to Item [5], wherein the interlayer comprises at least one of a colored interlayer and a heat-shielding interlayer.
[7] The vehicle window glass according to Item [5] or [6], further comprising at least one of a heat-reflective coating, a colored coating, and a colored film.
[8] The vehicle window glass according to Item [6] or [7], wherein at least one of the first and second glass plates is a colored glass plate or a clear glass plate.
[9] The vehicle window glass according to Items [1] to [4], further comprising at least one of a heat-reflective coating, a colored coating, and a colored film.
[10] The vehicle window glass according to Item [9], wherein a glass plate constituting the vehicle window glass is a colored glass plate or a clear glass plate.
[11] The vehicle window glass according to any one of Items [1] to [10], wherein a PS value, which is an index indicating how favorable the appearance of the skin is, is 70 or more.
[12] The vehicle window glass according to any one of Items [1] to [11], wherein a color temperature of light transmitted through the vehicle window glass is from 5,000 K to 8,000 K.
[13] The vehicle window glass according to Item [12], wherein a color deviation Duv of light transmitted through the vehicle window glass is 0.010 or less.
[14] The vehicle window glass according to any one of Items [1] to [13], wherein a solar-radiation transmittance (Tds) of the vehicle window glass is 70% or less.

### Advantageous Effects of Invention

According to the present disclosure, it is possible to provide a vehicle window glass with which it is possible to realize a vehicle space that is favorable to the skin of occupants.

### Brief Description of Drawings

Fig. 1 is a cross-sectional diagram showing an example of a structure of a vehicle window glass according to an embodiment;
Fig. 2 is a cross-sectional diagram of a vehicle window glass according to a structure example A;
Fig. 3 is a cross-sectional diagram of a vehicle window glass according to a structure example B;
Fig. 4 is a cross-sectional diagram of a vehicle window glass according to a structure example C;
Fig. 5 is a cross-sectional diagram of a vehicle window glass according to a structure example D;
Fig. 6 is a cross-sectional diagram of a vehicle window glass according to a structure example E;
Fig. 7 is a cross-sectional diagram of a vehicle window glass according to a structure example F;
Fig. 8 is a cross-sectional diagram of a vehicle window glass according to a structure example G;
Fig. 9 is a cross-sectional diagram of a vehicle window glass according to a structure example H;
Fig. 10 is a cross-sectional diagram of a vehicle window glass according to a structure example I;
Fig. 11 is a cross-sectional diagram of a vehicle window glass according to a structure example J;
Fig. 12 is a cross-sectional diagram of a vehicle window glass according to a structure example K;
Fig. 13 is a cross-sectional diagram of a vehicle window glass according to a structure example L;
Fig. 14 is a cross-sectional diagram of a vehicle window glass according to a structure example M;
Fig. 15 is a graph showing results of experiments according to an SD method;
Fig. 16 is a graph showing a relationship between PS values and how favorable the skin looks;
Fig. 17 is a graph showing relative procollagen production amounts per cell; and
Fig. 18 is a graph showing relative hyaluronic acid production amounts per cell.

### Description of Embodiments

### <Overview of Present Disclosure>

A vehicle window glass according to the present disclosure is characterized in that it satisfies the following three Requirements (1) to (3)

Requirement (1): An average transmittance A in a near-infrared wavelength band from 780 nm to 2,500 nm is 65% or less.

Requirement (2): A value B, which is a percentage (b1/b2×100) of b1 with respect to b2, is 50% or more, where b1 is an average transmittance in a visible-light long wavelength band of 650 nm to 750 nm, and b2 is an average transmittance in a visible-light total wavelength band of 380 nm to 780 nm.

Requirement (3): The transmittance has a minimum value in the wavelength band of 500 nm to 600 nm.

A vehicle window glass according to the present disclosure satisfies the above-shown three Requirements (1) to (3), and as a result, it can realize a vehicle space that is favorable to the skin of the occupant. That is, by satisfying the above-shown Requirements (1) and (2), it favorably affects the skin of the occupant. Further, by satisfying the above-shown Requirements (2) and (3), it is possible to make the skin of the occupant look beautiful in the vehicle.

A vehicle window glass according to the present disclosure is a window glass used in a vehicle, and may be a laminated glass or a single glass plate. A coating may be applied to a surface of a vehicle window glass according to the present disclosure, or a film may be provided on the surface of the vehicle window glass. Examples of coatings include a heat-reflective coating for reflecting heat, a UV (ultraviolet) coating for blocking UV rays, a protective coating for protecting the glass, and an anti-fog coating. Examples of films include a heat-shielding film, a protective film, a UV-cut film, and an anti-fog film.

As long as the vehicle window glass according to the present disclosure satisfies the above-shown three Requirements (1) to (3), there are no limitations on the structure of the vehicle window glass, and the vehicle window glass may have an arbitrary structure. Examples of structures of vehicle window glasses according to the present disclosure will be described hereinafter in detail with reference to the drawings.

### <Detailed Description of the Present Disclosure>

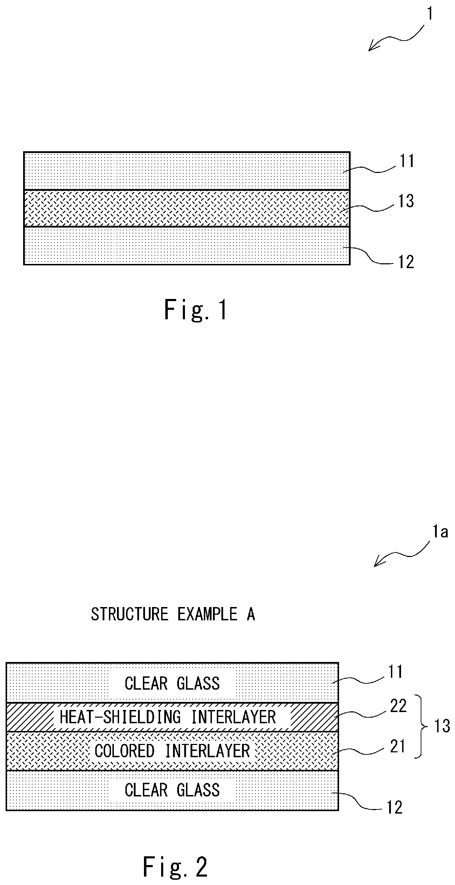

Fig. 1 is a cross-sectional diagram showing an example of a structure of a vehicle window glass according to an embodiment. The example structure shown in Fig. 1 illustrates the case in which the vehicle window glass according to this embodiment is a laminated glass. As shown in Fig. 1, the vehicle window glass 1 according to this embodiment includes a first glass plate 11, a second glass plate 12, and an interlayer 13 sandwiched between the first glass plate 11 and second glass plate 12. The vehicle window glass 1 according to this embodiment is used, for example, for a windshield, a rear glass, a side glass, a door glass, a quarter glass, a roof glass, or the like of a vehicle.

The vehicle window glass 1 according to this embodiment may have a flat shape or a curved shape. The curved shape may include a flat part. Each of the first and second glass plates 11 and 12 may be a flat plate or a curved plate. A curved plate may have a singly curved shape (curved in one direction) or may have a three-dimensionally curved shape (curved in two or more directions). The three-dimensional shape may be, for example, a double curved shape (curved in two orthogonal directions). In the example described hereinafter, a case where both the first and second glass plates 11 and 12 are formed of flat plates will be described. However, the descriptions below can be applied to a case where at least one of them is formed of a curved plate. Note that in the case where the vehicle window glass 1 includes first and second glass plates 11 and 12 and has a curved shape, they may be arranged so that the first glass plate 11 forms a convex surface and the second glass plate 12 forms a concave surface.

The shape of the outer edge of each of the first and second glass plates 11 and 12 in a plan view may be arbitrary shapes. However, the outer edges preferably have, for example, a rectangular shape, a trapezoidal shape, or a triangular shape. For example, the first glass plate 11 is disposed on the vehicle exterior side, and the second glass plate 12 is disposed on the vehicle interior side.

The first and second glass plates 11 and 12 can be formed, for example, by using a transparent inorganic glass. For example, soda lime glass, aluminosilicate glass, borosilicate glass, alkali-free glass, or quartz glass may be used for the first and second glass plates 11 and 12. The first and second glass plates 11 and 12 are manufactured, for example, by a float process, a fusion process, or the like, but their manufacturing processes are not limited to these examples.

For example, in this embodiment, the soda lime glass having a base composition shown below may be used as each of the first and second glass plates 11 and 12. Note that numerical values are expressed by mass% based on the oxide.

### (Base Composition of Soda Lime Glass)

| | |
|---|---|
| SiO₂: | 65 to 75% |
| Al₂O₃: | 0 to 5% |
| MgO: | 0 to 6% |
| CaO: | 5 to 15% |
| Na₂O: | 10 to 20% |
| K₂O: | 0 to 5% |

The thickness of each of the first and second glass plates 11 and 12 is, for example, 0.1 mm to 10 mm, and in view of the tolerance to stone chips, is preferably 0.3 mm or more and more preferably 0.5 mm or more. Further, in order to reduce the mass of the glass plate, the thickness of each of the first and second glass plates 11 and 12 is preferably 3.5 mm or less, more preferably 3.0 mm or less, and still more preferably 2.1 mm or less. The upper and lower limits of the aforementioned numerical ranges can be arbitrarily combined, and may be, for example, 0.3 mm to 3.5 mm, 1.1 mm to 3.0 mm, or 1.7 mm to 2.1 mm. The thicknesses of the first and second glass plates 11 and 12 may be equal to each other or different from each other. For example, the thickness of the first glass plate 11, which is disposed on the outside of the vehicle, may be more than the thickness of the second glass plate 12, which is disposed on the inside of the vehicle. When the thickness of the first glass plate 11, which is disposed on the outside of the vehicle, is increased as described above, the strength of the vehicle window glass 1 against an object flying toward the vehicle window glass 1 is improved.

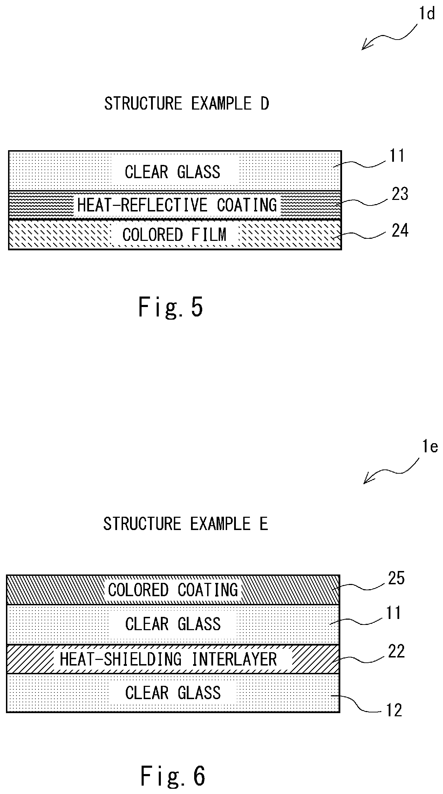

Note that in this embodiment, the vehicle window glass may be constituted by a single glass plate as shown in Fig. 5 and the like. In this case, the thickness of the glass plate is preferably from 1.5 mm to 10 mm. The thickness of the glass plate may be, for example, 1.8 mm or more, 2.5 mm or more, or 2.8 mm or more. Further, the thickness of the glass plate may be 6 mm or less, 4 mm or less, 3.1 mm or less, or 2.3 mm or less. The upper and lower limits of the aforementioned numerical ranges can be arbitrarily combined; for example, 2.4 mm to 4 mm may be selected.

The interlayer 13 is disposed so as to be sandwiched between the first and second glass plates 11 and 12. The thickness of the interlayer 13 is not particularly limited, but is preferably 2.40 mm or less, and may be, for example, 1.60 mm or less, or 1.20 mm or less. Further, the thickness of the interlayer 13 is preferably 0.50 mm or more and more preferably 0.70 mm or more. By adjusting the thickness of the interlayer 13 to the aforementioned range, the transparency of the vehicle window glass can be ensured, and excessive increase in the weight of the vehicle window glass can be prevented.

The interlayer 13 can be formed by, for example, using a resin material including polyvinyl butyral (PVB), ethylene-vinyl acetate (EVA), a cycloolefin polymer, a urethane resin, or a polyvinylidene fluoride resin (PVDF). The interlayer 13 preferably contains PVB or EVA.

In this embodiment, an interlayer 13 having a predetermined function(s) may be used. For example, a heat-shield interlayer having a heat-shield property may be used as the interlayer 13. Further, a colored interlayer having a predetermined color may be used as the interlayer 13. Further, a sound insulating interlayer having a sound insulating property may be used as the interlayer 13. Further, the interlayer 13 may have a plurality of functions. For example, a colored heat-shield interlayer having a predetermined color and also having a heat-shield property may be used as the interlayer 13.

In this embodiment, the interlayer 13 may be formed by combining a plurality of interlayers. For example, the interlayer 13 may be formed by combining the above-described heat-shielding interlayer and the colored interlayer (see Fig. 2). Note that the interlayers to be combined may be arbitrarily determined according to the required function(s).

In the case where the interlayer 13 has both a coloring function and a heat shielding function, the heat shielding layer may be disposed on the outer side of the vehicle than the colored layer in order to suppress the deterioration of the coloring agent due to light and heat incident from the outside of the vehicle.

Further, in this embodiment, a film may be provided in an arbitrary place (layer) of the vehicle window glass 1 shown in Fig. 1. Examples of films include a heat shielding film, a protective film, a ultraviolet-cut film, and an anti-fog film. Note that these films are distinguished from the interlayer on the assumption that they are made of a material(s) different from that of the interlayer. Further, a coating may be applied to at least one surface of at least one of the first and second glass plates 11 and 12. Examples of coatings include a heat-reflective coating, a colored coating, a ultraviolet coating (UV coating), a protective coating, and an anti-fog coating.

Further, in this embodiment, the solar-radiation transmittance (Tds) of the vehicle window glass is preferably 70% or less, more preferably 65% or less, still more preferably 60% or less, still more preferably 55% or less, still more preferably 50% or less, and particularly preferably 45% or less. When the solar-radiation transmittance is 70% or less, it is possible to prevent the occupant or the like from feeling hot due to sunlight that passed through the vehicle window glass. The solar-radiation transmittance (Tds) can be determined by a method according to ISO 13837 and can be measured using a spectrophotometer.

The vehicle window glass 1 shown in Fig. 1 satisfies three Requirements (1) to (3) described below.

Requirement (1): An average transmittance A in a near-infrared wavelength band from 780 nm to 2,500 nm is 65% or less.

Requirement (2): A value B, which is a percentage (b1/b2×100) of b1 with respect to b2, is 50% or more, where b1 is an average transmittance in a visible-light long wavelength band of 650 nm to 750 nm, and b2 is an average transmittance in a visible-light total wavelength band of 380 nm to 780 nm.

Requirement (3): The transmittance has a minimum value in the wavelength band of 500 nm to 600 nm.

The vehicle window glass 1 shown in Fig. 1 satisfies the above-shown three Requirements (1) to (3), and as a result, it can realize a vehicle space that is favorable to the skin of the occupant. That is, by satisfying the above-shown Requirements (1) and (2), it favorably affects the skin of the occupant.

That is, Requirement (1) specifies that the average transmittance A in the near-infrared wavelength band is 65% or less. It is said that light in the near-infrared wavelength band causes the aging of human skin as in the case of ultraviolet rays. Therefore, it is considered that it is possible to prevent aging of the skin of the occupant by setting the average transmittance A for light in the near-infrared wavelength band to 65% or less.

Further, Requirement (2) specifies that the value B is 50% or more. Note that the value B is the ratio of an average transmittance b1 in a visible-light long wavelength band to an average transmittance b2 in a visible-light total wavelength band, and indicates the ratio of light in the visible-light long wavelength band (from 650 nm to 750 nm). Light in the visible-light long wavelength band (from 650 nm to 750 nm), i.e., red light, favorably affects human skin and has an effect of preventing wrinkles and sagging. Therefore, a favorable effect on the skin of the occupant can be achieved by setting the ratio of light in the visible-light long wavelength band (from 650 nm to 750 nm), i.e., the value B, to 50% or more.

Further, by satisfying the above-shown Requirements (2) and (3), it is possible to make the skin of the occupant look beautiful in the vehicle. That is, light in the visible-light long wavelength band (from 650 nm to 750 nm), i.e., red light, has an effect of making the skin look beautiful. Therefore, when Requirement (2) is satisfied, the ratio of light in the visible-light long wavelength band (from 650 nm to 750 nm), i.e., the value B, is 50% or more, so that it is possible to make the skin of the occupant look beautiful in the vehicle. Further, light in a wavelength band from 500 nm to 600 nm has an effect of deteriorating the impression of the skin because of the optical characteristics of the skin. Therefore, by adjusting the transmittance so that the transmittance has the minimum value in the wavelength band of 500 nm to 600 nm (Requirement (3)), it is possible to reduce the amount of light in the wavelength band from 500 nm to 600 nm, and to make the skin of the occupant look beautiful in the vehicle.

Note that the average transmittance b1 can be obtained by arithmetically averaging the values of the transmittance obtained every 5 nm in the wavelength range from 650 nm to 750 nm. The average transmittance b2 can be obtained by arithmetically averaging the values of the transmittance obtained every 5 nm in the wavelength range from 380 nm to 780 nm. Further, the "minimum value of transmittance" refers to, among the extreme values of the transmission spectrum in a predetermined wavelength range, a point at which the change of the transmittance changes from the decrease to the increase from the shorter wavelength side toward the longer wavelength side. That is, the transmittance at the wavelength at which the transmittance is the minimum is less than the transmittance at wavelengths less or more than that wavelength.

The vehicle window glass according to the present embodiment described above can provide a vehicle interior environment that is favorable to the skin of the occupant.

Note that in this embodiment, the above-described average transmittance A of Requirement (1) is preferably 65% or less, more preferably 40% or less, still more preferably 30% or less, and particularly preferably 20% or less. The above-described value B of Requirement (1) may be, for example, 5% or more. Further, the above-described value B of Requirement (2) is preferably 50% or more, more preferably 90% or more, still more preferably 100% or more, and still more preferably 110% or more. The above-described value B of Requirement (2) may be, for example, 150% or less.

The vehicle window glass according to this embodiment may have an average transmittance of less than 1% in an ultraviolet-light wavelength band shorter than 380 nm. By adopting such a configuration, it is possible to reduce the amount of ultraviolet rays that pass through the vehicle window glass, and thereby to prevent occupants from getting sunburned.

In this embodiment, the average transmittance b1 in the visible-light long wavelength band from 650 nm to 750 nm is preferably 30% or more, more preferably 50% or more, still more preferably 55% or more, still more preferably 58% or more, still more preferably 60% or more, still more preferably 65% or more, and particularly preferably 70% or more. Further, the average transmittance b1 in the visible-light long wavelength band is preferably 90% or less, more preferably 80% or less, and still more preferably 75% or less.

In this embodiment, the average transmittance b2 in the visible-light total wavelength band from 380 nm to 780 nm is preferably 30% or more, more preferably 40% or more, and still more preferably 50% or more. Further, the average transmittance b2 in the visible-light total wavelength band is preferably 80% or less and more preferably 75% or less. Further, the visible-light transmittance (Tv) of the vehicle window glass according to this embodiment is preferably 70% or more, more preferably 71% or more, and still more preferably 72% or more. Note that the visible-light transmittance (Tv) is a visible-light transmittance measured according to JIS R3212 "Test methods of safety glazing materials for road vehicles" in 2015.

Note that although a structure example of a laminated glass is shown in Fig. 1, the vehicle window glass according to this embodiment can also be applied to a single plate glass. When it is applied to a single plate glass, it is also formed so as to satisfy the above-shown three Requirements (1) to (3). Even in the case of a single plate glass, at least one of a heat-reflective coating, a colored coating, or a colored film may additionally be provided. Further, a colored glass plate or a green glass plate may be used as the single plate glass.

The PS value, which is an index indicating how favorable the appearance of the skin is, of the vehicle window glass according to this embodiment is preferably 70 or more, more preferably 76 or more, still more preferably 80 or more, and particularly preferably 85 or more. By adjusting the PS value to the aforementioned range, the skin of the occupant can be made to look beautiful inside the vehicle. Note that the PS value is an index indicating how favorable the appearance of the skin of a Japanese woman is. The method for determining the PS value is disclosed in Kenjiro Hashimoto et al.: Preference Index for Japanese Complexion Color under Illumination, Journal of the Illuminating Engineering Institute of Japan, Vol. 82 No. 11 P895 (1998), and in Japanese Unexamined Patent Application Publication H11-258047. Note that in the present application, the illumination light refers to light that was emitted from a D65 light source and transmitted through a vehicle window glass.

In this embodiment, the color temperature of light that has passed through the vehicle window glass is preferably 5,000 K or more and 8,000 K or less, and more preferably 5,500 K or more and 8,000 K or less. By adjusting the color temperature of light that has passed through the vehicle window glass to the aforementioned range, the skin of the occupant can be made to look beautiful inside the vehicle.

In this embodiment, the color deviation Duv of light that has passed through the vehicle window glass is preferably 0.010 or less, more preferably 0 or less, still more preferably -0.002 or less, still more preferably -0.005 or less, and particularly preferably -0.010 or less. When the color deviation Duv of light that has passed through the vehicle window glass is adjusted to the aforementioned range, it is possible to impart a reddish tint to the transmitted light, so that the skin of the occupant appears more beautiful in the interior of the vehicle. In order to make light that has passed through the vehicle window glass red-type, regarding the color tone of the light that has passed through the vehicle window glass, in the CIE 1976L*a*b* color coordinate system, it is preferably that a*>0, more preferably a*>3, and still more preferably a*>5. Further, regarding the color tone of light that has passed through the vehicle window glass, it is preferably expressed as -8<b*<8, more preferably -5<b*<5, and still more preferably -2<b*<2. Regarding the absolute values of a* and b*(i.e.,|a*|and |b*|), it is preferable that |a*|>|b*|.

Next, specific examples of structures of the vehicle window glass according to this embodiment will be described with reference to Figs. 2 to 14.

### <Structure Example A>

Fig. 2 is a cross-sectional diagram of a vehicle window glass according to a structure example A. As shown in Fig. 2, the vehicle window glass 1a according to the structure example A has a laminated-glass structure in which a colored interlayer 21 and a heat-shielding interlayer 22 are sandwiched between a first glass plate 11 and a second glass plate 12. The colored interlayer 21 and the heat-shielding interlayer 22 together constitute the interlayer 13. Each of the first and second glass plates 11 and 12 can be formed by, for example, using clear glass. The composition of the clear glass is shown below. Note that numerical values are expressed by mass% based on the oxide.

### (Composition of Clear Glass)

| | |
|---|---|
| SiO₂: | 65 to 80% |
| Al₂O₃: | 0 to 5% |
| MgO: | 0 to 12% |
| CaO: | 0 to 15% |
| Na₂O: | 5 to 20% |
| K₂O: | 0 to 10% |

Total iron content converted to Fe₂O₃:0 to 0.2%

For example, a clear glass having a total iron content (as Fe₂O₃) of 0 to 0.04% can be suitably used in order to improve the visible-light transmittance of the vehicle window glass 1a. The total amount of Na₂O and K₂O may preferably be 5 to 20%.

For the colored interlayer 21, for example, a pink-type interlayer can be used. The pink-type interlayer can be formed by adding a colorant(s) to the material of the above-described interlayer. For example, a pigment(s), a dye(s), a carbon material(s), or the like is used for the colorant. Examples of pigments include azo-based pigments, phthalocyanine-based pigments, quinacridone-based pigments, perylene-based pigments, dioxazine-based pigments, anthraquinone-based pigments, isoindoline-based pigments, diketopyrrolopyrrole-based pigments, selenium-based pigments, quinacridone-based pigments, metal oxide-based pigments, and composite metal oxide-based pigments. Examples of dyes include pyrene-based dyes, aminoketone-based dyes, anthraquinone-based dyes, azo-based dyes, and phthalocyanine-based dyes. Examples of carbon materials include graphene, graphite, carbon black, and carbon nanotubes. Note that for the colorant, two or more of the above-mentioned materials may be used by mixing them (i.e., mixing colors) in order to adjust the color. By providing the colored interlayer 21, it is possible to obtain a vehicle window glass 1a that satisfies the above-shown Requirements (1) to (3), and to realize a vehicle space that is confortable for the skin of the occupant.

The heat-shielding interlayer 22 can be formed by, for example, adding infrared blocking particles to the material of the above-described interlayer. As the infrared blocking particles, for example, tin-doped indium oxide (ITO fine particles), antimony-doped tin oxide (ATO fine particles), and composite tungsten oxide fine particles can be used. However, the infrared blocking particles are not limited to these examples. For example, an organic infrared absorber such as a phthalocyanine-based dye may be used. When ITO fine particles are used, it is preferred to use fine particles of which the average particle diameter of primary particles is 100 nm or less. If the average particle diameter of ITO fine particles exceeds 100 nm, the transparency of the interlayer may become insufficient. Further, the content of ITO fine particles is preferably 0.1 to 3.0 parts by mass per 100 parts by mass of the resin components. When the content of ITO fine particles is less than 0.1 parts by mass, sufficient infrared blocking performance may not be imparted. Further, when the content exceeds 3.0 parts by mass, the visible-light transmittance may be insufficient. By providing the heat-shielding interlayer 22, it is possible to suppress the transfer of heat into the vehicle, and thereby to improve the comfort in the vehicle space.

### <Structure Example B>

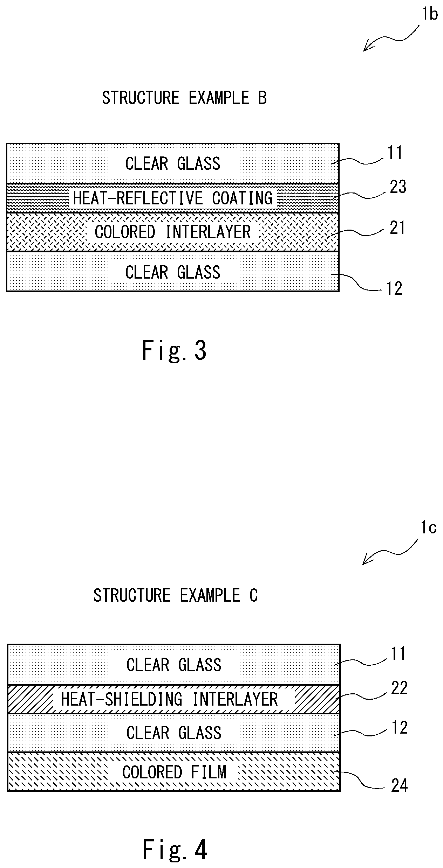

Fig. 3 is a cross-sectional diagram of a vehicle window glass according to a structure example B. As shown in Fig. 3, the vehicle window glass 1b according to the structure example B has a laminated-glass structure in which a colored interlayer 21 is sandwiched between a first glass plate 11 and a second glass plate 12. A heat-reflective coating 23 is provided on the inner surface of the first glass plate 11. Each of the first and second glass plates 11 and 12 can be made, for example, of clear glass.

For the colored interlayer 21, the above-described materials can be used. By providing the colored interlayer 21, it is possible to achieve a vehicle window glass 1b that satisfies the above-shown Requirements (1) to (3), and to realize a vehicle space that is comfortable to the skin of the occupant.

The heat-reflective coating 23 may be either an inorganic or an organic coating. By providing the heat-reflective coating 23, it is possible to suppress the transfer of heat into the vehicle, and thereby to improve the comfort in the vehicle space. The heat-reflective coating 23 can be formed by a dry coating process such as physical vapor deposition (PVD) or chemical vapor deposition (CVD). Examples of the PVD methods include a vacuum evaporation, a sputtering, and an ion plating, and the sputtering method is preferred because it provides a film with excellent adhesion and flatness.

As the inorganic coating, for example, a multilayer film having a structure in which a transparent dielectric layer (hereinafter also referred to as "an A layer") and an infrared reflection layer (hereinafter also referred to as "a B layer") are alternately laminated can be used. For example, a multilayer film in which A layers and B layers are laminated in the order of A layer/B layer/A layer/B layer/A layer, or a multilayer film in which A layers and B layers are laminated in the order of A layer/B layer/A layer/B layer/A layer/B layer/A layer may be used. However, the number of laminated layers is not limited to these examples. Further, a layer different from the A layer and the B layer may be additionally provided, for example, between the A layer and the B layer in order to improve the adhesiveness and/or for the purpose of protection or the like.

A material such as a metal oxide or a metal nitride can be used for the transparent dielectric layer. As the metal oxide, zinc oxide, tin oxide, titanium oxide, silicon oxide, or the like can be used. Note that the transparent dielectric film is preferably formed to have a reduced thickness in order to transmit light, so that it hardly affects the transparency of vehicle window glass 1b.

A metal film or semiconductor film can be used for the infrared reflection layer. Examples of materials for forming such a metal film include silver(Ag),etc. More preferably, the semiconductor film includes a film of at least one doped metal oxide selected from the group consisting of fluorine-doped tin oxide (FTO), antimony-doped tin oxide (ATO), tin-doped indium oxide (ITO), gallium-doped zinc oxide (GZO), and aluminum-doped zinc oxide (AZO).
Still more preferably, the semiconductor film includes a fluorine-doped tin oxide (FTO) film in order to obtain a higher thermal shielding property.

For the organic-based coating, for example, a multilayer film in which 100 or more resin layers having different refractive indices are laminated can be used. In order to enhance the infrared reflection property, the number of resin layers is preferably 400 or more and more preferably 600 or more. The upper limit of the number of laminated layers of the laminate is limited by the upper limit of the film thickness of the organic coating, and is preferably roughly 5,000 layers. The multilayer film preferably has a structure in which high refractive index layers having a refractive index of 1.62 to 1.70 at a wavelength of 589 nm and low refractive index layers having a refractive index of 1.50 to 1.58 at a wavelength of 589 nm are alternately laminated.

The refractive index of a resin layer can be adjusted by adjusting the type of resin, the type of functional group or skeleton in the resin, and the content of the resin as appropriate. The resin constituting the resin layer is preferably a thermoplastic resin. Examples of resin include polyolefin, alicyclic polyolefin, polyamide, aramid, acrylic resin, polyvinyl chloride, polyvinylidene chlorids, polystyrene, styrene copolymer, polycarbonate, polyester, polyether sulfone, polyether ether ketone, modified polyphenylene ether, polyphenylene sulfide, polyether imide, polyimide, polyarylate, and fluoropolymer, etc.

In view of the interlayer adhesiveness, the feasibility of forming a highly precise laminated structure, strength, heat resistance, and transparency, it is preferred to use one or more kinds of polyesters selected from polyethylene terephthalate, polyethylene terephthalate copolymers, polyethylene naphthalate, polyethylene naphthalate copolymers, polybutylene terephthalate, polybutylene terephthalate copolymers, polybutylene naphthalate, polybutylene naphthalate copolymers, polyhexamethylene terephthalate, polyhexamethylene terephthalate copolymers, polyhexamethylene naphthalate, polyhexamethylene naphthalate copolymers, and the like. For example, polyethylene terephthalate and polyethylene terephthalate copolymers may be alternately laminated.

### <Structure Example C>

Fig. 4 is a cross-sectional diagram of a vehicle window glass according to a structure example C. As shown in Fig. 4, the vehicle window glass 1c according to the structure example C has a laminated-glass structure in which a heat-shielding interlayer 22 is sandwiched between a first glass plate 11 and a second glass plate 12. A colored film 24 is provided on the surface of the second glass plate 12 located on the inside of the vehicle. Each of the first and second glass plates 11 and 12 can be formed using clear glass, for example.

In the structure example C, the colored film 24 may be disposed between the first glass plate 11 and the second glass plate 12. In this case, the colored film 24 may be provided within the heat-shielding interlayer 22. Furthermore, another interlayer may be disposed between the first glass plate 11 and the heat-shielding interlayer 22 or between the second glass plate 12 and the heat-shielding interlayer 22, and the colored film 24 may be disposed between such interlayer and the heat-shielding interlayer 22.

pink-type films or red-type films can be used as the colored film 24. The colored film 24 can be formed using any material selected from the group consisting of polyvinyl chloride, polyethylene terephthalate, polyethylene naphthalate, polyamide, polyether, polysulfone, polyether sulfone, polycarbonate, polyarylate, polyetherimide, polyether ether ketone, polyimide, aramid, polybutylene terephthalate, triacetyl cellulose, polyurethane, and cycloolefin polymer. Specifically, IROMIZU 03-25ic (manufactured by NAKAGAWA CHEMICAL) or IROMIZU 07-25ic (manufactured by NAKAGAWA CHEMICAL) can be used as the colored film 24. By providing the colored film 24, it is possible to realize a vehicle window glass 1c which satisfies the above-shown Requirements (1) to (3), and to realize a vehicle space that is favorable to the skin of the occupant.

The aforementioned materials can be used for the heat-shielding interlayer 22. By providing heat-shielding interlayer 22, it is possible to suppress the transfer of heat into the vehicle, and thereby to improve the comfort of the vehicle space.

### <Structure Example D>

Fig. 5 is a cross-sectional diagram of a vehicle window glass according to a structure example D. As shown in Fig. 5, the vehicle window glass 1d according to the structure example D includes a first glass plate 11, a heat-reflective coating 23, and a colored film 24. Specifically, the vehicle window glass 1d can be formed by applying a heat-reflective coating 23 to a surface of the first glass plate 11, and then disposing the colored film 24 on the surface of the first glass plate 11 to which the heat-reflective coating 23 has been applied. The vehicle window glass 1d is composed of a single glass plate (first glass plate 11). The first glass plate 11 can be formed, for example, from clear glass.

The aforementioned materials can be used as materials for the colored film 24. By providing the colored film 24, it is possible to realize a vehicle window glass 1d which satisfies the above-shown Requirements (1) to (3), and to realize a vehicle space that is comfortable for the skin of the occupant.

The aforementioned materials can be used as materials for the heat-reflective coating 23. By providing the heat-reflective coating 23, it is possible to suppress transmission of heat into the vehicle space, and thus improve the comfort inside the vehicle.

### <Structure Example E>

Fig. 6 is a cross-sectional diagram of a vehicle window glass according to a structure example E. As shown in Fig. 6, the vehicle window glass 1e according to the structure example E has a laminated glass structure in which a heat-shielding interlayer 22 is sandwiched between a first glass plate 11 and a second glass plate 12. A colored coating 25 is applied to the outer surface of the first glass plate 11. Each of the first glass plate 11 and second glass plate 12 may be formed from, for example, clear glass.

A pink-based coating agent can be used for the colored coating 25. For example, the colored coating 25 can be formed by a wet process using colloidal gold. For example, colored coating 25 having a desired coral pink color can be formed by using SiO₂ and TiO₂ as matrix components, and adjusting the particle diameter of the colloidal gold and the refractive index of the matrix by optimizing the composition ratio of the solid contents of Au, SiO₂, and TiO₂. By providing the colored coating 25, it is possible to realize a vehicle window glass 1e which satisfies the above-shown Requirements (1) to (3), and to realize a vehicle space that is favorable to the skin of the occupant.

The aforementioned resin materials can be used for the heat-shielding interlayer 22. By providing the heat-shielding interlayer 22, it is possible to suppress the transfer of heat into the vehicle, and thereby to improve the comfort in the vehicle space.

### <Structure Example F>

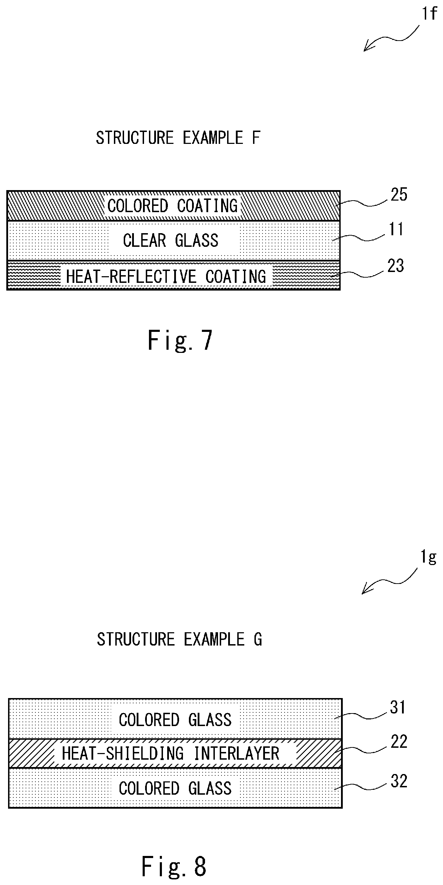

Fig. 7 is a cross-sectional diagram of a vehicle window glass according to a structure example F. As shown in Fig. 7, the vehicle window glass 1f according to the structure example F has a configuration in which a colored coating 25 is applied to one of the surfaces of a first glass plate 11, and a heat-reflective coating 23 is applied to the other surface thereof. The vehicle window glass 1f is composed of a single glass plate (first glass plate 11). The first glass plate 11 may be formed by using, for example, clear glass.

The aforementioned materials can be used for the colored coating 25. By providing the colored coating 25, it is possible to achieve a vehicle window glass 1f that satisfies the above-mentioned requirements (1) to (3), and to realize a vehicle space in which the occupant's skin feels comfortable.

The aforementioned materials can be used for the heat-reflective coating 23. By providing the heat-reflective coating 23, it is possible to suppress the transfer of heat into the vehicle, and thereby improving the comfort of the vehicle space.

### <Structure Example G>

Fig. 8 is a cross-sectional diagram of a vehicle window glass according to a structure example G. As shown in Fig. 8, the vehicle window glass 1g according to the structure example G has a laminated glass structure in which a heat-shielding interlayer 22 is sandwiched between a first glass plate 31 and a second glass plate 32. Each of the first and second glass plates, 31 and 32, may be formed by using colored glass.

The first and second glass plates 31 and 32 can be formed by, adjusting and forming the glass base composition containing various raw materials such as silica sand, by with the addition of, for example, erbium oxide or other additives. For example, when erbium oxide is added, a pink-colored glass can be formed by adding Fr₂O₃ so that the mass percentage based on the oxide is 0.01% or more and 0.5% or less. Note that the glass used in the structure example G contains the composition described in the above-described base composition of soda lime glass. By using colored glass for each of the first and second glass plates 31 and 32, it is possible to realize a vehicle window glass 1g which satisfies Requirements (1) to (3) described above, and to realize a vehicle interior that is favorable for the skin of the occupant.

The aforementioned materials can be used for the heat-shielding interlayer 22. By providing the heat-shielding interlayer 22, it is possible to suppress the transfer of heat into the vehicle, and thereby to improve the comfort in the vehicle space.

### <Structure Example H>

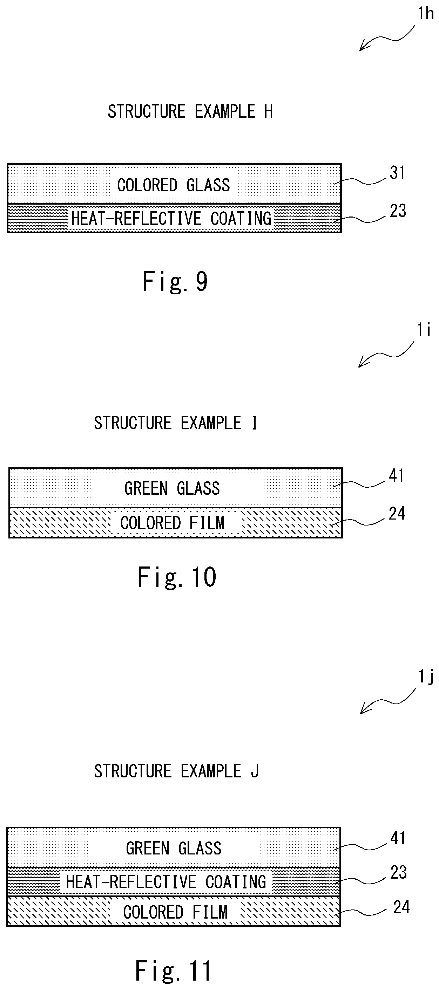

Fig. 9 is a cross-sectional diagram of a vehicle window glass according to a structure example H. As shown in Fig. 9, the vehicle window glass 1h according to the structure example H has a structure in which a heat-reflective coating 23 is applied to one of the surfaces of the first glass plate 31. The first glass plate 31 is formed by using the aforementioned colored glass. The vehicle window glass 1h consists of a single glass plate, i.e., the first glass plate 31.

Since the first glass plate 31 is a colored glass, it is possible to obtain a vehicle window glass 1h satisfying the above Requirements (1) to (3) and to provide a vehicle space that is comfortable for the occupant's skin.

The aforementioned materials can be used for the heat-reflective coating 23. By providing the heat-reflective coating 23, it is possible to suppress the transfer of heat into the vehicle and thereby improve comfort in the vehicle space.

### <Structure Example I>

Fig. 10 is a cross-sectional diagram of a vehicle window glass according to a structure example I. As shown in Fig. 10, the vehicle window glass 1i according to the structure example I has a structure in which a colored film 24 is provided on one of the surfaces of a first glass plate 41. The vehicle window glass 1i is composed of a single glass plate (first glass plate 41).

The first glass plate 41 is formed by using a green glass plate. The green glass plate has a property of absorbing ultraviolet rays. The green glass plate can be formed by adding an iron component made from raw material(s) such as iron powder, iron oxide powder, and red iron oxide (Bengala). The composition of the green glass plate is shown below. Note that numerical values indicate mass percentages based on the oxide form.

### (Composition of Green Glass Plate)

| | |
|---|---|
| SiO₂: | 65 to 75% |
| Al₂O₃: | 0 to 5% |
| MgO: | 0 to 6% |
| CaO: | 5 to 15% |
| Na₂O: | 10 to 20% |
| K₂O: | 0 to 5% |
| Total iron converted as Fe₂O_{3:} | 0.3 to 0.8% |
| TiO₂: | 0.2 to 0.8% |

Although the first glass plate 41 is a green glass plate, the vehicle window glass 1i includes a colored film 24 on one of the surfaces of the first glass plate 41. Therefore, it is possible to realize a vehicle window glass 1i which satisfies the above-shown Requirements (1) to (3), and to realize a vehicle space that is favorable to the skin of the occupant.

### <Structure Example J>

Fig. 11 is a cross-sectional diagram of a vehicle window glass according to a structure example J. As shown in Fig. 11, the vehicle window glass 1j according to the structure example J includes a first glass plate 41, a heat-reflective coating 23, and a colored film 24. Specifically, the vehicle window glass 1j can be formed by first applying a heat-reflective coating 23 to the surface of the first glass plate 41, and then forming a colored film 24 on the surface of the first glass plate 41 where the heat-reflective coating 23 has been applied. The vehicle window glass 1j is composed of a single glass plate (first glass plate 41).

The above-described green glass plate can be used for the first glass plate 41. Although the first glass plate 41 is a green glass plate, the colored film 24 is provided on the surface of the first glass plate 41 in the vehicle window glass 1j. Therefore, it is possible to realize a vehicle window glass 1j which satisfies the above-shown Requirements (1) to (3), and to realize a vehicle space that is favorable to the skin of the occupant.

The aforementioned materials can be used for the heat-reflective coating 23. By providing the heat-reflective coating 23, it is possible to suppress the transfer into the vehicle, thereby improving the comfort of the vehicle interior.

### <Structure Example K>

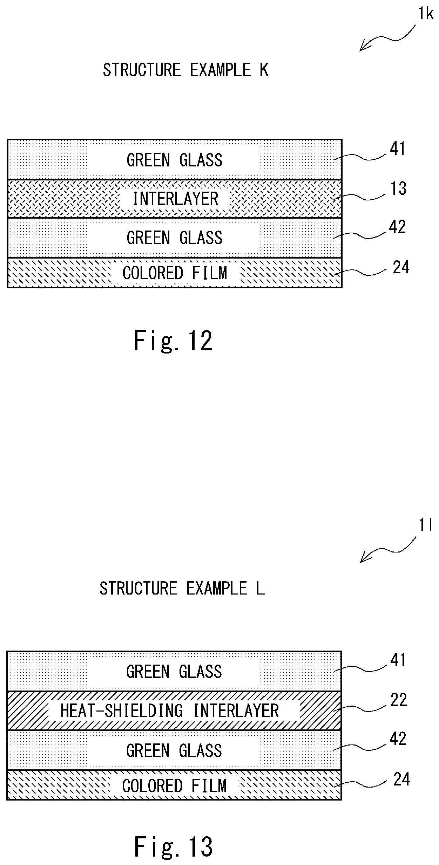

Fig. 12 is a cross-sectional diagram of a vehicle window glass according to a structure example K. As shown in Fig. 12, the vehicle window glass 1k according to the structure example K has a laminated-glass structure in which an interlayer 13 is sandwiched between a first glass plate 41 and a second glass plate 42. A colored film 24 is provided on the interior surface of the second glass plate 42. The first glass plate 41 and the second glass plate 42 are formed using the above-described green glass plate. The aforementioned materials can be used for the interlayer 13.

Although the first and second glass plates 41 and 42 are green glass plates, in the vehicle window glass 1k, a colored film 24 is provided on the interior-side surface of the second glass plate 42. Therefore, it is possible to realize a vehicle window glass 1k which satisfies the above-mentioned Requirements (1) to (3), and to realize a comfortable vehicle space for the skin of the occupant.

### <Structure Example L>

Fig. 13 is a cross-sectional diagram of a vehicle window glass according to a structure example L. As shown in Fig. 13, the vehicle window glass 11 according to the structure example L has a laminated-glass structure in which a heat-shielding interlayer 22 is sandwiched between a first glass plate 41 and a second glass plate 42. A colored film 24 is provided on the interior surface of the second glass plate 42. The first and second glass plates 41 and 42 is formed by using the above-described green glass plate.

Although the first and second glass plates 41 and 42 are green glass plates, in the vehicle window glass 11, a colored film 24 is provided on the surface of the second glass plate 42. Therefore, it is possible to realize a vehicle window glass 11 which satisfies the above-described requirements (1) to (3), and to realize a vehicle space that is favorable to the skin of the occupant.

The aforementioned materials can be used for the heat-shielding interlayer 22. By providing the heat-shielding interlayer 22, it is possible to suppress the transfer of heat into the vehicle, and thereby improve the comfort within the vehicle space.

### <Structure Example M>

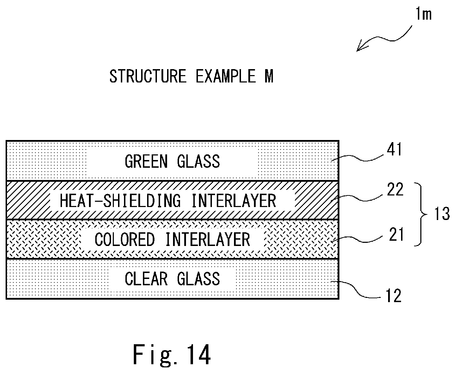

Fig. 14 is a cross-sectional diagram of a vehicle window glass according to a structure example M. As shown in Fig. 14, the vehicle window glass 1m according to the structure example M has a laminated-glass structure in which a colored interlayer 21 and a heat-shielding interlayer 22 are sandwiched between a first glass plate 41 and a second glass plate 12. The colored interlayer 21 and the heat-shielding interlayer 22 constitute an interlayer 13. The first glass plate 41 is formed by using the above-described green glass plate. The second glass plate 12 is formed by using the aforementioned clear glass plate.

The aforementioned materials can be used for the colored interlayer 21. By providing the colored interlayer 21, it is possible to realize a vehicle window glass 1m which satisfies the above Requirements (1) to (3) can be realized, and a vehicle space having good conditions for the occupant's skin can be provided. Further, the aforementioned materials can be used for the heat-shielding interlayer 22. By providing the heat-shielding interlayer 22, it is possible to suppress the transfer of heat into the vehicle, and thereby to improve the comfort in the vehicle space.

Specific structural examples of vehicle window glass according to this embodiment have been described above. However, the structural examples described above are merely examples, and a vehicle window glass according to this embodiment may have a structure other than those described above.

### [Examples]

Next, examples will be described.

Examples 1-1 to 1-11 shown below are comparative examples. Further, Examples 2-1 to 2-5, Examples 3-1 to 3-10, Examples 4-1 to 4-4, Examples 5-1 to 5-4, Examples 6-1 to 6-16, and Examples 7-1 and 7-2 are examples according to the present disclosure.

### <Examples 1-1 to 1-11>

Firstly, samples according to Examples 1-1 to 1-11 were prepared in order to measure the optical characteristics of each of the components constituting the vehicle window glass. Specifically, as the sample according to Example 1-1, a clear glass plate with a thickness of 3.5 mm (manufactured by AGC Inc., marketed as FL) was prepared. As the sample according to Example 1-2, a green glass plate with a thickness of 3.5 mm (manufactured by AGC Inc., marketed as VFL) was prepared. As the sample according to Example 1-3, a high heat ray absorption green glass plate with a thickness of 3.5 mm (manufactured by AGC Inc., marketed as UVFL) was prepared.

As the sample according to Example 1-4, a sample in which a heat-reflective coating was applied to one of the surfaces of a clear glass plate with a thickness of 3.5 mm (manufactured by AGC Inc., marketed as FL) was prepared. An IRIS coating (manufactured by AGC Glass Europe) was used as the heat-reflective coating. In this example, an Ag3-type IRIS coating was used. Note that Ag3 refers to a laminated film in which three functional layers containing silver and four dielectric layers, which are made of oxides containing zinc and tin as main components, are alternately laminated by a sputtering method so that the dielectric layers sandwich the functional layers. As the sample according to Example 1-5, a laminated glass in which an interlayer (PVB) made of polyvinyl butyral with a thickness of 0.76 mm was sandwiched between two green glass plates (VFL) each having a thickness of 2.0 mm, was prepared. As the sample according to Example 1-6, a laminated glass in which a heat-shielding interlayer with a thickness of 0.76 mm was sandwiched between two green glass plates (VFL) each having a thickness of 2.0 mm was prepared. For the heat-shielding interlayer, an S-LEC^{™} solar control film (manufactured by Sekisui Chemical Co., Ltd.) was used.

As the sample according to Example 1-7, a sample in which a pink-type film was bonded to a clear glass with a thickness of 3.5 mm (FL) was prepared. IROMIZU 03-25ic (manufactured by Nakagawa Chemical Co., Ltd.) was used for the pink-type film. As the sample according to Example 1-8, a sample in which a red-type film was bonded to a clear glass with a thickness of 3.5 mm (FL) was prepared. IROMIZU 07-25ic (manufactured by Nakagawa Chemical Co., Ltd.) was used as the red-type film.

As the sample according to Example 1-9, a laminated glass in which a colored interlayer with a thickness of 0.38 mm was sandwiched between two clear glass plates each having a thickness of 2.0 mm (FL) was prepared. VANCEVA^{™} color code 0001 (manufactured by Eastman Chemical Co.) was used for the colored interlayer. As the sample according to Example 1-10, a colored glass plate with a thickness of 12 mm (manufactured by AGC Inc.) was prepared. As the sample according to Example 1-11, a sample in which a colored coating (pink-type coating) was applied to a clear glass plate with a thickness of 3.5 mm (FL) was prepared. The colored coating was applied as described below.

Firstly, a coating liquid was prepared by using the below-shown method.

Ethyl silicate 40 (ES40) and tetra-n-butyl titanate (TA25) were dissolved in a solvent (hexylene glycol), and acetylacetone (AcAc) was added to the resultant solution while stirring the solution so that its ratio to titanium, i.e., a molar ratio [AcAc]/[Ti] reached 4. Then, after stirring the resultant solution at 25°C for 1 hour, 5.54 wt% hydrochloric acid aqueous solution was added to the resultant solution so that a molar ratio [H₂O]/([SiO₂]+[TiO₂]) became 2.5. Further, the resultant solution was stirred at a room temperature for 4 hours to perform hydrolysis and polycondensation reactions of ES40 and TA25. Next, a coating liquid was obtained by adding a solution which was obtained in advance by dissolving chloroauric acid tetrahydrate in hexylene glycol to the resultant solution, and further stirring the mixture at a room temperature for 1 hour. The solid content of this solution was 10 wt%. The coating liquid was used after filtering it through a 1 µm PTFE filter.

Next, a film was formed by the below-shown method.

A substrate was prepared by polishing a clear glass (FL) having a thickness of 3.5 mm with cerium oxide powder, washing it with distilled water, and sufficiently drying the cleaned glass. After that, a coating liquid was applied to the substrate with a spin coater (manufactured by Mikasa Corporation), the resulting coating film was dried at 120°C for 5 minutes, pre-fired in a muffle furnace (manufactured by THOMAS KAGAKU Co., Ltd.) at 400°C for 5 minutes, cooled to room temperature, and then firing it in a muffle furnace at 650°C for 3 minutes to obtain a pink coated glass.

The optical characteristic of each of the samples prepared as described above was measured by using an ultraviolet visible near-infrared spectrophotometer UH4150 (manufactured by Hitachi High-Tech Corporation). Then, by using these measurement values, an average transmittance A in a near-infrared wavelength band from 780 nm to 2,500 nm (Requirement (1)), an average transmittance b1 in a visible-light long wavelength band from 650 nm to 750 nm, an average transmittance b2 in a visible-light total wavelength band from 380 nm to 780 nm, a value B (b1/b2×100) (Requirement (2)), a color temperature, a color deviation Duv, and a PS value were obtained. Note that the PS value was determined based on descriptions in the aforementioned literature. Further, by using the measured transmission spectrum, it was determined whether or not there is a minimum value of transmittance in the wavelength band of 500 nm to 600 nm (Requirement (3)).

Table 1 shows the results of the optical properties of the samples according to Examples 1-1 to 1-11. As shown in Table 1, there was no sample according to Examples 1-1 to 1-11 that satisfied all of the above-shown Requirements (1) to (3). Specifically, each of the samples according to Examples 1-2 to 1-6 satisfied Requirements (1) and (2) and showed an excellent effect on the skin. However, they did not satisfy Requirement (3) and therefore did not show an effect of making the skin look beautiful. Further, each of the samples according to Examples 1-7 to 1-11 satisfied Requirements (2) and (3) and showed an effect of making the skin look beautiful. However, they did not satisfy Requirement (1) and therefore did not show an excellent effect on the skin.

### [Table 1]

**Table 1**

| | Example 1-1 | Example 1-2 | Example 1-3 | Example 1-4 | Example 1-5 | Example 1-6 | Example 1-7 | Example 1-8 | Example 1-9 | Example 1-10 | Example 1-11 |
|---|---|---|---|---|---|---|---|---|---|---|---|
| Glass structure | Clear glass (FL) | Green glass (VFL) | Green glass (UVFL) | Clear glass / Heat-reflective coating | VFL/PVB/VFL | VFL / Heat shielding interlayer / VFL | Clear glass / Pink-type film | Clear glass / Red-type film | Clear glass / Colored interlayer / Clear glass | Colored glass | Colored coating / Clear Glass |
| (1) Average transmittance A (%) (780-2500nm) | 84.2 | 55.9 | 45.3 | 0.7 | 34.1 | 12.8 | 78.8 | 80.1 | 70.6 | 84.9 | 87.3 |
| Average transmittance b1 (%) (650-750nm) | 87.1 | 65.7 | 55.5 | 56.6 | 60.4 | 59 | 79.7 | 82 | 85.3 | 88.7 | 88.2 |
| Average transmittance b2 (%) (380-780nm) | 88.9 | 74.8 | 63 | 64.3 | 66.7 | 64.9 | 70 | 70.4 | 78.7 | 89.5 | 86.2 |
| (2) Value B (=b1/b2×100) | 98 | 87.8 | 88.2 | 88 | 90.5 | 91 | 113.8 | 116.5 | 108.4 | 99.1 | 102.2 |
| (3) Presence or absence of minimum value of transmittance (500-600nm) | × | × | × | × | × | × | ○ | ○ | ○ | ○ | ○ |
| Color temperature | 6807 | 7035 | 6485 | 6080 | 7137 | 7111 | 6267 | 5820 | 5959 | 6758 | 6613 |
| Color deviation (Duv) | -0.0013 | 0.0027 | 0.0067 | 0.0004 | 0.0038 | 0.0042 | -0.0169 | -0.0145 | -0.0157 | -0.0022 | -0.0056 |
| How favorable skin looks (PS value) | 79 | 72 | 70 | 75 | 70 | 70 | 94 | 94 | 88 | 79 | 84 |
| Favorable effect on skin (satisfies (1) and (2) shown above) | × | ○ | ○ | ○ | ○ | ○ | × | × | × | × | × |
| Effect to make skin look beautiful (satisfies (2) and (3) shown above) | × | × | × | × | × | × | ○ | ○ | ○ | ○ | ○ |
| PS value: A: 80 or more; | B | B | B | B | B | B | A | A | A | B | A |
| B: equal to or more than 70 and less than 80; | | | | | | | | | | | |
| C: other | | | | | | | | | | | |
| Tds (Solar radiatio transmittance according to ISO 13837) | 85.8 | 62.8 | 50.9 | 37.4 | 53.0 | 47.1 | 71.7 | 72.7 | 76.5 | 87.6 | 85.8 |

### <Examples 2-1 to 2-5>

Under an assumption that each of the samples according to Examples 2-1 to 2-3 had the structure example A shown in Fig. 2, and each of the samples according to Examples 2-4 and 2-5 had the structure example B shown in Fig. 3, simulations were carried out for these samples. The simulations were performed by using the measurement results of Examples 1-1 to 1-11 and the optical properties of newly used materials.

For each of the samples according to Examples 2-1 to 2-3, a simulation was performed by using a clear glass with a thickness of 2 mm (FL) as each of the first and second glass plates 11 and 12 in the structure example A shown in Fig. 2, and using the colored interlayer used in Example 1-9 as the colored interlayer 21. Further, in Examples 2-1 to 2-3, heat-shielding interlayers A to C (among S-LEC (Registered Trademark) heat-shielding interlayers (manufactured by Sekisui Chemical Co., Ltd.), L (heat-shielding interlayer A), A55 (heat - shielding interlayer B), and AN01 (heat-shielding interlayer C), respectively) were used as the heat-shielding interlayers 22, respectively. The heat shielding characteristics of the heat-shielding interlayers A to C increase in the order of heat-shielding interlayer A, heat-shielding interlayer B, and heat-shielding interlayer C. The optical properties of the heat-shielding interlayers A to C were separately obtained, and simulations were performed while taking the measurement results of Example 1-9 into consideration. Then, the optical properties of the samples according to Examples 2-1 to 2-3 were calculated.

Further, for the samples according to Examples 2-4 and 2-5, simulations were performed by using a clear glass with a thickness of 2 mm (FL) as each of the first and second glass plates 11 and 12 in the structure example B shown in Fig. 3, and using the colored interlayer used in Example 1-9 as the colored interlayer 21. Further, in each of Examples 2-4 and 2-5, the IRIS coating (manufactured by AGC Glass Europe) was used as the heat-reflective coating 23. In this example, IRIS coatings of the Ag2 type and the Ag3 type were used. Note that Ag2 refers to a laminated film in which two functional layers each containing silver and three dielectric layers each made of an oxide containing zinc and tin as main components are alternately laminated by a sputtering method in such a manner that the dielectric layers are laminated so as to sandwich the functional layers therebetween. The optical properties of the heat-reflective coatings Ag2 and Ag3 were separately obtained, and simulations were performed while taking the measurement results of Example 1-9 into consideration. Then, the optical properties of the samples according to Examples 2-4 and 2-5 were calculated.

Table 2 shows the simulation results of the optical characteristics of the samples according to Examples 2-1 to 2-5. As shown in Table 2, each of the samples according to Examples 2-1 to 2-5 satisfied all of the above-shown Requirements (1) to (3). Therefore, it can be said that each of the samples according to Examples 2-1 to 2-5 has a structure capable of achieving both a favorable effect on the skin and an effect of making the skin appear beautiful. Further, in Examples 2-1 to 2-5, the PS value was evaluated as B or more (i.e., 70 or more), and the index indicative of the favorability of the skin appearance yielded excellent results.

### [Table 2]

**Table 2**

| | Example 2-1 | Example 2-2 | Example 2-3 | Example 2-4 | Example 2-5 |
|---|---|---|---|---|---|
| Glass structure | Structure Example A | Structure Example A | Structure Example A | Structure Example B | Structure Example B |
| | Colored interlayer | Colored interlayer | Colored interlayer | Colored interlayer | Colored interlayer |
| | Heat shielding interlayer A | Heat shielding interlayer B | Heat shielding interlayer C | Heat-reflective coating Ag2 | Heat-reflective coating Ag3 |
| (1) Average transmittance A (%) (780-2500nm) | 25.8 | 25.1 | 11.3 | 6.1 | 0.8 |
| Average transmittance bl (%) (650-750nm) | 77.9 | 40.9 | 59.2 | 71.8 | 51.3 |
| Average transmittance b2 (%) (380-780nm) | 68.9 | 50 | 56.7 | 63.9 | 53.1 |
| (2) Value B (=b1/b2×100) | 113.1 | 81.9 | 104.4 | 112.4 | 96.5 |
| (3) Presence or absence of transmissivity minima (500-600nm) | ○ | ○ | ○ | ○ | ○ |
| Color temperature | 5874 | 5659 | 5852 | 6921 | 5626 |
| Color deviation (Duv) | -0.015 | -0.008 | -0.012 | -0.022 | -0.019 |
| Favorable appearance of skin (PS value) | 88 | 79 | 85 | 92 | 89 |
| Favorable effect on skin (satisfies (1) and (2) shown above) | ○ | ○ | ○ | ○ | ○ |
| Effect to make skin look beautiful (satisfies (2) and (3) shown above) | ○ | ○ | ○ | ○ | ○ |
| PS value: A: 80 or more; | A | B | A | A | A |
| B: equal to or more than 70 and less than 80; | | | | | |
| C: other | | | | | |
| Tds (Solar radiatio transmittance according to ISO 13837) | 59.9 | 49.8 | 44.1 | 41.6 | 30.8 |

### <Examples 3 - 1 to 3-10>

Under the assumption that each of the samples according to Examples 3-1 to 3-6 had the structure example C shown in Fig. 4, and each of the samples according to Examples 3-7 to 3-10 had the structure example D shown in Fig. 5, simulations were conducted on these samples. The simulations were performed by using the measurement results of Examples 1-1 to 1-11 and the optical characteristics of the newly used materials.

For the samples according to Examples 3-1 to 3-6, clear glass (FL) with a thickness of 3.5 mm was used as both the first glass plate 11 and second glass plate 12 in structure example C shown in Fig. 4. In each of Examples 3-1 to 3-6, any one of the heat-shielding interlayers A to C was used as the heat-shielding interlayer 22. In Examples 3-1 to 3-6, a pink-type film or a red-type film was used as the colored film 24. The configuration of each sample is shown in Table 3. The optical characteristics of each of the heat-shielding interlayers A to C were separately obtained, and simulations were conducted using the measurement results of Examples 1-1, 1-7, and 1-8, to determine the optical characteristics of the samples according to Examples 3-1 to 3-6 by calculation.

Further, for each of the samples according to Examples 3-7 to 3-10, a clear glass with a thickness of 3.5 mm (FL) was used as the first glass plate 11 in the structure example D shown in Fig. 5. In each of Examples 3-7 to 3-10, either heat-reflective coating Ag2 or heat-reflective coating Ag3 was used as the heat-reflective coating 23. Further, in each of Examples 3-7 to 3-10, a pink-type film or a red-type film was used as the colored film 24. The structure of each sample is shown in Table 3. The optical characteristics of the heat-reflective coatings Ag2 and Ag3 were separately obtained, and simulations were conducted using the measurement results of Examples 1-7 and 1-8 to calculate the optical characteristics of the samples according to Examples 3-7 to 3-10.

Table 3 shows the simulation results of the optical characteristics of the samples according to Examples 3-1 to 3-10. As shown in Table 3, the samples according to Examples 3-1 to 3-10 satisfy all of the above requirements (1) to (3). Therefore, it can be concluded that the samples according to Examples 3-1 to 3-10 have a configuration capable of providing both a favorable effect on the skin and an effect of making the skin look beautiful. Further, in each of Examples 3-1 to 3-10, the PS value was determined to be A or more (80 or more), the index indicating how favorability of skin appearance showed excellent results.

### [Table 3]

**Table 3**

| | Example 3-1 | Example 3-2 | Example 3-3 | Example 3-4 | Example 3-5 | Example 3-6 | Example 3-7 | Example 3-8 | Example 3-9 | Example 3-10 |
|---|---|---|---|---|---|---|---|---|---|---|
| Glass structure | Structure Example C | Structure Example C | Structure Example C | Structure Example C | Structure Example C | Structure Example C | Structure Example D | Structure Example D | Structure Example D | Structure Example D |
| | Heat shielding interlayer A | Heat shielding interlayer A | Heat shielding interlayer B | Heat shielding interlayer B | Heat shielding interlayer C | Heat shielding interlayer C | Heat-reflective coating Ag2 | Heat-reflective coating Ag2 | Heat-reflective coating Ag3 | Heat-reflective coating Ag3 |
| | Pink-type film | Red-type film | Pink-type film | Red-type film | Pink-type film | Red-type film | Pink-type film | Red-type film | Pink-type film | Red-type film |
| (1) Average transmittance A (%) (780-2500nm) | 20.8 | 21.2 | 20.2 | 20.7 | 8.8 | 9.1 | 6.0 | 6.1 | 0.8 | 0.8 |
| Average transmittance bl (%) (650-750nm) | 63.4 | 65.3 | 33.3 | 34.3 | 48.1 | 49.6 | 67.1 | 69.1 | 47.8 | 49.2 |
| Average transmittance b2 (%) (380-780nm) | 55 | 55.5 | 39.8 | 40.1 | 45.3 | 45.7 | 56.9 | 57.1 | 47 | 47.1 |
| (2) Value B (=b1/b2×100) | 115.2 | 117.6 | 83.7 | 85.7 | 106.3 | 108.5 | 117.9 | 121 | 101.7 | 104.5 |
| (3) Presence or absence of minimum value of transmittance (500-600nm) | ○ | ○ | ○ | ○ | ○ | ○ | ○ | ○ | ○ | ○ |
| Color temperature | 6224 | 5800 | 5964 | 5625 | 6196 | 5797 | 7400 | 6658 | 5892 | 5484 |
| Color deviation (Duv) | -0.015 | -0.013 | -0.008 | -0.006 | -0.013 | -0.01 | -0.023 | -0.021 | -0.02 | -0.018 |
| How favorable skin looks (PS value) | 92 | 94 | 85 | 85 | 91 | 92 | 97 | 97 | 94 | 95 |
| Favorable effect on skin (satisfies (1) and (2) shown above) | ○ | ○ | ○ | ○ | ○ | ○ | ○ | ○ | ○ | ○ |
| Effect to make skin look beautiful (satisfies (2) and (3) shown above) | ○ | ○ | ○ | ○ | ○ | ○ | ○ | ○ | ○ | ○ |
| PS value: A: 80 or more; | A | A | A | A | A | A | A | A | A | A |
| B: equal to or more than 70 and less than 80; | | | | | | | | | | |
| C: other | | | | | | | | | | |
| Tds (Solar radiatio transmittance according to ISO 13837) | 47.6 | 48.3 | 39.4 | 40.0 | 35.0 | 35.5 | 37.5 | 37.9 | 27.4 | 27.6 |

### <Examples 4-1 to 4-4>

Under an assumption that each of the samples according to Examples 4-1 and 4-2 had the structure example E shown in Fig. 6, and each of the samples according to Examples 4-3 and 4-4 had the structure example F shown in Fig. 7, simulations were carried out for these samples. Simulations were performed for these samples based on the measurement results of Examples 1-1 to 1-11 and the optical characteristics of newly used materials.

For each of the samples according to Examples 4-1 and 4-2, a clear glass with a thickness of 3.5 mm (FL) was used as each of the first and second glass plates 11 and 12 in the structure example E shown in Fig. 6. In each of Examples 4-1 and 4-2, either heat-shielding interlayer A or heat shielding interlayer C was used as the heat-shielding interlayer 22. Further, in each of Examples 4-1 and 4-2, a pink-type coating was used as the colored coating 25. The measurement results of the sample according to Example 1-11 were used as data of the optical characteristics of the colored coating 25 (pink-type coating). Table 4 shows the structures of these samples. The optical characteristics of the heat-shielding interlayers A and C were separately acquired, and simulations were performed while considering the measurement results of Examples 1-1 and 1-11. Then, the optical characteristics of the samples according to Examples 4-1 and 4-2 were calculated.

Further, for each of the samples according to Examples 4-3 and 4-4, a clear glass with a thickness of 3.5 mm (FL) was used as the first glass plate 11 in the structure example F shown in Fig. 7. In each of Examples 4-3 and 4-4, either heat-reflective coating Ag2 or heat-reflective coating Ag3 was used as the heat-reflective coating 23. Further, in each of Examples 4-3 and 4-4, a pink-type coating was used as the colored coating 25. The measurement results of the sample according to Example 1-11 were used as data of the optical characteristics of the colored coating 25 (pink-type coating). Table 4 shows the structures of these samples. The optical characteristics of the heat-reflective coatings Ag2 and Ag3 were separately obtained, and simulations were conducted while considering the measurement results of Example 1-11. Then, the optical characteristics of the samples according to Examples 4-3 and 4-4 were calculated.

Table 4 shows the simulation results of the optical characteristics of the samples according to Examples 4-1 to 4-4. As shown in Table 4, each of the samples according to Examples 4-1 to 4-4 satisfied all of the above-shown Requirements (1) to (3). Therefore, it can be said that each of the samples according to Examples 4-1 to 4-4 has a structure that can achieve both an excellent effect on the skin and an effect of making the skin look beautiful. Further, in each of Examples 4-1 to 4-4, the PS value was determined to be A or more (80 or more), indicating that the index indicating how favorable the skin looks showed excellent results.

### [Table 4]

**Table 4**

| | Example 4-1 | Example 4-2 | Example 4-3 | Example 4-4 |
|---|---|---|---|---|
| Glass structure | Structure Example E | Structure Example E | Structure Example F | Structure Example F |
| | Colored coating | Colored coating | Colored coating | Colored coating |
| | Heat shielding interlayer A | Heat shielding interlayer C | Heat-reflective coating Ag2 | Heat-reflective coating Ag3 |
| (1) Average transmittance A (%) (780-2500nm) | 22.9 | 9.8 | 6.6 | 0.9 |
| Average transmittance b1 (%) (650-750nm) | 70.2 | 53.3 | 74.2 | 52.9 |
| Average transmittance b2 (%) (380-780nm) | 65.2 | 53.9 | 69.9 | 57.8 |
| (2) Value B (=b1/b2×100) | 107.5 | 98.8 | 106.2 | 91.4 |
| (3) Presence or absence of minimum value of transmittance (500-600nm) | ○ | ○ | ○ | ○ |
| Color temperature | 6558 | 6517 | 7683 | 6270 |
| Color deviation (Duv) | -0.0038 | -0.0014 | -0.0117 | -0.009 |
| How favorable skin looks (PS value) | 82 | 80 | 88 | 85 |
| Favorable effect on skin (satisfies (1) and (2) shown above) | ○ | ○ | ○ | ○ |
| Effect to make skin look beautiful (satisfies (2) and (3) shown above) | ○ | ○ | ○ | ○ |
| PS value: A: 80 or more; | A | A | A | A |
| B: equal to or more than 70 and less than 80; | | | | |
| C: other | | | | |
| Tds (Solar radiatio transmittance according to ISO 13837) | 55.4 | 41.2 | 46.3 | 33.7 |

### <Examples 5 - 1 to 5-4>

Under the assumption that each of the samples according to Examples 5-1 and 5-2 had the structure example G shown in Fig. 8, and each of the samples according to Examples 5-3 and 5-4 had the structure example H shown in Fig. 9, simulations were conducted for these samples. The simulations were performed using the measurement results of Examples 1-1 to 1-11 and the optical characteristics of materials newly used.

For each of the samples according to Examples 5-1 and 5-2, a colored glass with a thickness of 12 mm (pink glass: see Example 1-10) was used as the first glass plate 31 and the second glass plate 32 in the structure example G shown in Fig. 8. The heat-shielding interlayer A was used as the heat-shielding interlayer 22 in Example 5-1, and the heat-shielding interlayer C was used as the heat-shielding interlayer 22 in Example 5-2. The measurement results of the sample according to Example 1-10 were used as data on the optical characteristics of each of the first and second glass plates 31 and 32 (pink glass). Table 5 shows the structures of these samples. The optical characteristics of the heat-shielding interlayer A and the heat-shielding interlayer C were separately obtained, and simulations were performed taking into account the measurement results of Example 1-10, whereby the optical characteristics of the samples according to Examples 5-1 and 5-2 were obtained by calculation.

Further, for the samples according to Examples 5-3 and 5-4, a colored glass with a thickness of 12 mm (pink glass: see Example 1-10) was used as the first glass plate 31 in the structure example H shown in Fig. 9. In each of Examples 5-3 and 5-4, the heat-reflective coating Ag2 or Ag3 was used as the heat-reflective coating 23. The measurement results of the sample according to Example 1-10 were used as data for the optical characteristics of the first glass plate 31 (pink glass). Table 5 shows the structures of these samples. The optical characteristics of the heat-reflective coatings Ag2 and Ag3 were separately obtained, and simulations were performed taking into account the measurement results of Example 1-10, whereby the optical characteristics of the samples according to Examples 5-3 and 5-4 were calculated.

Table 5 shows the simulation results of the optical characteristics of the samples according to Examples 5-1 to 5-4. As shown in Table 5, the samples according to Examples 5-1 to 5-4 satisfied all of the above Requirements (1) to (3). Therefore, the samples according to Examples 5-1 to 5-4 can be said to have a configuration capable of realizing both an excellent effect on the skin and an effect of making the skin appear beautiful. Further, in Examples 5-1 to 5-4, the PS value was determined to be B or more (i.e., 70 or more), and the index indicating how favorable the skin looks showed favorable results.

### [Table 5]

**Table 5**

| | Example 5-1 | Example 5-2 | Example 5-3 | Example 5-4 |
|---|---|---|---|---|
| Glass structure | Structure Example G | Structure Example G | Structure Example H | Structure Example H |
| | Colored glass | Colored glass | Colored glass | Colored glass |
| | Heat shielding interlayer A | Heat shielding interlayer C | Heat-reflective coating Ag2 | Heat-reflective coating Ag3 |
| (1) Average transmittance A (%) (780-2500nm) | 23.9 | 10.4 | 6.7 | 0.9 |
| Average transmittance b1 (%) (650-750nm) | 71.8 | 54.5 | 74.6 | 53.2 |
| Average transmittance b2 (%) (3 80-780nm) | 68.1 | 56.3 | 72.5 | 60.2 |
| (2) Value B (=b1/b2×100) | 105.5 | 96.8 | 102.9 | 88.3 |
| (3) Presence or absence of minimum value of transmittance (500-600nm) | ○ | ○ | ○ | ○ |
| Color temperature | 6651 | 6604 | 7835 | 6424 |
| Color deviation (Duv) | -0.0012 | 0.0012 | -0.0082 | -0.0055 |
| How favorable skin looks (PS value) | 79 | 76 | 84 | 81 |
| Favorable effect on skin (satisfies (1) and (2) shown above) | ○ | ○ | ○ | ○ |
| Effect to make skin look beautiful (satisfies (2) and (3) shown above) | ○ | ○ | ○ | ○ |
| PS value: A: 80 or more; | B | B | A | A |
| B: equal to or more than 70 and less than 80; | | | | |
| C: other | | | | |
| Tds (Solar radiatio transmittance according to ISO 13837) | 57.9 | 43.1 | 47.9 | 35.1 |

### <Examples 6 - 1 to 6-16>

Structure example I shown in Fig. 10 was assumed for the samples of Examples 6-1 to 6-4; structure example J shown in Fig. 11 was assumed for the samples of Examples 6-5 to 6-12; structure example K shown in Fig. 12 was assumed for the samples of Examples 6-13 and 6-14; structure example L shown in Fig. 13 was assumed for the samples of Examples 6-15 and 6-16. Simulations were carried out for these samples. The simulations were performed using the measurement results of Examples 1-1 to 1-11 and the optical characteristics of the newly used materials.

For each of the samples according to Examples 6-1 to 6-4, the green glass plate with a thickness of 3.5 mm (VFL: see Example 1-2) or a high heat ray absorption green glass plate with a thickness of 3.5 mm (UVFL: see Example 1-3) was used as the first glass plate 41 in the structure example I shown in Fig. 10. In each of Examples 6-1 to 6-4, a pink-type film or a red-type film was used as the colored film 24. Table 6 shows the structures of each sample.

The measurement results of the sample according to Example 1-2 were used as data of the optical characteristics of the first glass plate 41 (green glass plate: VFL). The measurement results of the sample according to Example 1-3 were used as data of the optical characteristics of the first glass plate 41 (high heat ray absorption green glass plate: UVFL). Data of the optical characteristics of the pink-type film was obtained by using the measurement results of Examples 1-1 and 1-7. Data of the optical characteristics of the red-type film was obtained by using the measurement results of Examples 1-1 and 1-8. Simulations were performed by using these measurement results, and the optical characteristics of the samples according to Examples 6-1 to 6-4 were calculated.

For each of the samples according to Examples 6-5 to 6-12, a green glass plate with a thickness of 3.5 mm (VFL: see Example 1-2) or a high heat ray absorption green glass plate with a thickness of 3.5 mm (UVFL: see Example 1-3) was used as the first glass plate 41 in the structure example J shown in Fig. 11. In each of Examples 6-5 to 6-12, a pink-type film or a red-type film was used as the colored film 24. In each of Examples 6-5 to 6-12, a heat-reflective coating Ag2 or Ag3 was used as the heat-reflective coating 23. Tables 6 and 7 show the structures of each sample.

The measurement results of the sample according to Example 1-2 were used as data of the optical characteristics of the first glass plate 41 (green glass plate: VFL). The measurement results of the sample according to Example 1-3 were used as data of the optical characteristics of the first glass plate 41 (high heat ray absorption green glass plate: UVFL). Data of the optical characteristics of the pink-type film was obtained by using the measurement results of Examples 1-1 and 1-7. Data of the optical characteristics of the red-type film was obtained by using the measurement results of Examples 1-1 and 1-8. Then, the optical characteristics of the heat-reflective coatings Ag2 and Ag3 were separately obtained, and simulations were performed using the data of the optical characteristics of the pink-type film, the data of the optical characteristics of the red-type film, and the measurement results of Examples 1-2 and 1-3 to calculate the optical characteristics of the samples according to Examples 6-5 to 6-12.

For each of the samples according to Examples 6-13 and 6-14, green glass plates with a thickness of 2.0 mm (VFL) were used as each of the first and second glass plates 41 and 42 in the structure example K shown in Fig. 12. In each of Examples 6-13 and 6-14, an interlayer made of polyvinyl butyral (PVB) was used as the interlayer 13. Further, in each of Examples 6-13 and 6-14, a pink-type film or a red-type film was used as the colored film 24. Table 7 shows the structures of these samples. Data of the optical characteristics of the pink-type film were obtained by using the measurement results of Examples 1-1 and 1-7. Data of the optical characteristics of the red-type film was obtained by using the measurement results of Examples 1-1 and 1-8. Then, a simulation was performed using the data of the optical characteristics of the pink-type film, the data of the optical characteristics of the red-type film, and the measurement results of Example 1-5, and the optical characteristics of the samples according to Examples 6-13 and 6-14 were calculated.

For each of the samples according to Examples 6-15 to 6-16, green glass plates with a thickness of 2.0 mm (VFL) were used as the first and second glass plates 41 and 42 in the structure example L shown in Fig. 13. In each of Examples 6-15 to 6-16, a heat-shielding interlayer 22 was used as the interlayer. Further, in each of Examples 6-15 to 6-16, a pink-type film or a red-type film was used as the colored film 24. Table 7 shows the structures of these samples. Data of the optical characteristics of the pink-type film was obtained by using the measurement results of Examples 1-1 and 1-7. Data of the optical characteristics of the red-type film was obtained by using the measurement results of Examples 1-1 and 1-8. Then, simulations were performed by using the data of the optical characteristics of the pink-type film, the data of the optical characteristics of the red-type film, and the measurement results of Example 1-6, and the optical characteristics of the samples according to Examples 6-15 to 6-16 were calculated.

Tables 6 and 7 show the simulation results of the optical characteristics of the samples according to Examples 6-1 to 6-16. As shown in Tables 6 and 7, each of the samples according to Examples 6-1 to 6-16 satisfied all the above Requirements (1) to (3). Therefore, it can be said that each of the samples according to Examples 6-1 to 6-16 has a structure that can achieve both an excellent effect on the skin and an effect of improving the appearance of the skin. Further, in each of Examples 6-1 to 6-16, the PS value was determined to be A or more (80 or more), an indicator of the favorability of appearance of the skin was excellent.

### [Table 6]

**Table 6**

| | Example 6-1 | Example 6-2 | Example 6-3 | Example 6-4 | Example 6-5 | Example 6-6 | Example 6-7 | Example 6-8 |
|---|---|---|---|---|---|---|---|---|
| Glass structure | Structure Example I | Structure Example I | Structure Example I | Structure Example I | Structure Example J | Structure Example J | Structure Example J | Structure Example J |
| | VFL | VFL | UVFL | UVFL | VFL | VFL | UVFL | UVFL |
| | Pink-type film | Red-type film | Pink-type film | Red-type film | Red-type film | Red-type film | Red-type film | Red-type film |
| | - | - | - | - | Heat-reflective coating Ag2 | Heat-reflective coating Ag3 | Heat-reflective coating Ag2 | Heat-reflective coating Ag3 |
| (1) Average transmittance A (%) (780-2500nm) | 52.2 | 53.0 | 42.3 | 42.9 | 3.5 | 0.5 | 2.6 | 0.3 |
| Average transmittance bl (%) (650-750nm) | 60.1 | 61.9 | 50.8 | 52.3 | 52.1 | 37.7 | 44 | 32 |
| Average transmittance b2 (%) (380-780nm) | 58.5 | 58.7 | 49.7 | 50 | 47.6 | 40.3 | 40.4 | 34.5 |
| (2) Value B (=b1/b2×100) | 102.7 | 105.3 | 102.2 | 104.5 | 109.4 | 93.5 | 109 | 92.8 |
| (3) Presence or absence of minimum value of transmittance (500-600nm) | ○ | ○ | ○ | ○ | ○ | ○ | ○ | ○ |
| Color temperature | 6556 | 6093 | 5982 | 5645 | 6993 | 5754 | 6282 | 5348 |
| Color deviation (Duv) | -0.013 | -0.01 | -0.009 | -0.006 | -0.016 | -0.014 | -0.012 | -0.009 |
| How favorable skin looks (PS value) | 89 | 91 | 89 | 89 | 94 | 92 | 94 | 91 |
| Favorable effect on skin (satisfies (1) and (2) shown above) | ○ | ○ | ○ | ○ | ○ | ○ | ○ | ○ |
| Effect to make skin look beautiful (satisfies (2) and (3) shown above) | ○ | ○ | ○ | ○ | ○ | ○ | ○ | ○ |
| PS value: A: 80 or more; | A | A | A | A | A | A | A | A |
| B: equal to or more than 70 and less than 80; | | | | | | | | |
| C: other | | | | | | | | |
| Tds (Solar radiatio transmittance according to ISO 13837) | 51.8 | 52.4 | 42.3 | 42.8 | 30.2 | 23.5 | 25.3 | 20.2 |

### [Table 7]

**Table 7**

| | Example 6-9 | Example 6-10 | Example 6-11 | Example 6-12 | Example 6-13 | Example 6-14 | Example 6-15 | Example 6-16 |
|---|---|---|---|---|---|---|---|---|
| Glass structure | Structure Example J | Structure Example J | Structure Example J | Structure Example J | Structure Example K | Structure Example K | Structure Example L | Structure Example L |
| | VFL | VFL | UVFL | UVFL | VFL | VFL | VFL | VFL |
| | Pink-type film | Pink-type film | Pink-type film | Pink-type film | Pink-type film | Red-type film | Pink-type film | Red-type film |
| | Heat-reflective coating Ag2 | Heat-reflective coating Ag3 | Heat-reflective coating Ag2 | Heat-reflective coating Ag3 | - | - | Heat shielding interlayer | Heat shielding interlayer |
| (1) Average transmittance A (%) (780-2500nm) | 3.4 | 0.5 | 2.5 | 0.3 | 32.4 | 32.9 | 12.1 | 12.3 |
| Average transmittance b1 (%) (650-750nm) | 50.6 | 36.6 | 42.8 | 31.1 | 55.2 | 56.8 | 54 | 55.6 |
| Average transmittance b2 (%) (380-780nm) | 47.5 | 40.2 | 40.2 | 34.4 | 53.9 | 54.2 | 52.5 | 52.9 |
| (2) Value B (=b1/b2×100) | 106.5 | 90.9 | 106.3 | 90.5 | 102.3 | 104.8 | 102.8 | 105.2 |
| (3) Presence or absence of minimum value of transmittance (500-600nm) | ○ | ○ | ○ | ○ | ○ | ○ | ○ | ○ |
| Color temperature | 7759 | 6178 | 6801 | 5658 | 6687 | 6210 | 6661 | 6194 |
| Color deviation (Duv) | -0.019 | -0.016 | -0.015 | -0.012 | -0.012 | -0.009 | -0.011 | -0.009 |
| How favorable skin looks (PS value) | 94 | 91 | 92 | 91 | 89 | 89 | 89 | 89 |
| Favorable effect on skin (satisfies (1) and (2) shown above) | ○ | ○ | ○ | ○ | ○ | ○ | ○ | ○ |
| Effect to make skin look beautiful (satisfies (2) and (3) shown above) | ○ | ○ | ○ | ○ | ○ | ○ | ○ | ○ |
| PS value: A: 80 or more; | A | A | A | A | A | A | A | A |
| B: equal to or more than 70 and less than 80; | | | | | | | | |
| C: other | | | | | | | | |
| Tds (Solar radiatio transmittance according to ISO 13837) | 30.0 | 23.4 | 25.1 | 20.1 | 44.6 | 45.1 | 39.2 | 39.7 |

### <Examples 7-1 and 7-2>

Under an assumption that each of the samples according to Examples 7-1 and 7-2 had the structure example M shown in Fig. 14, simulations were carried out for these samples. The simulations were performed by using the measurement results of Examples 1-1 to 1-11 and the optical characteristics of newly used materials.

For each of the samples according to Examples 7-1 and 7-2, a simulation was performed by using a green glass with a thickness of 2 mm (VFL) as the first glass plate 11 in the structure example M shown in Fig. 14, using a clear glass with a thickness of 2 mm (FL) as the second glass plate 12, and using the colored interlayer used in Example 1-9 as the colored interlayer 21. Further, in Examples 7-1, heat-shielding interlayer A was used as heat -shielding interlayer 22, and in Example 7-2, heat-shielding interlayer C was used as heat-shielding interlayer 22. The optical characteristics of the heat-shielding interlayers A and C were separately obtained, and simulations were performed while taking into consideration the measurement results of Examples 1-1, 1-2, and 1-9 to calculate the optical characteristics of the samples according to Examples 7-1 and 7-2.

Table 8 shows the simulation results of the optical characteristics of the samples according to Examples 7-1 and 7-2. As shown in Table 8, each of the samples according to Examples 7-1 and 7-2 satisfied all of the above-shown Requirements (1) to (3). Therefore, it can be said that each of the samples according to Examples 7-1 and 7-2 has a structure that can achieve both an favorable effect on the skin and an effect of making the skin look beautiful. Further, in each of Examples 7-1 and 7-2, the PS value was determined to be B or more (i.e., 70 or more), indicating that an index indicating how favorable the skin looks showed good results.

### [Table 8]

**Table 8**

| | Example 7-1 | Example 7-2 |
|---|---|---|
| Glass structure | Structure Example M | Structure Example M |
| | Colored interlayer | Colored interlayer |
| | Heat shielding interlayer A | Heat shielding interlayer C |
| (1) Average transmittance A (%) (780-2500nm) | 18.3 | 7.8 |
| Average transmittance b1 (%) (650-750nm) | 70.6 | 55.4 |
| Average transmittance b2 (%) (380-780nm) | 66.5 | 57.2 |
| (2) Value B (=b1/b2×100) | 1.06 | 0.97 |
| (3) Presence or absence of transmissivity minima (500-600nm) | ○ | ○ |
| Color temperature | 6019 | 6002 |
| Color deviation (Duv) | -0.012 | -0.009 |
| Favorable appearance of skin (PS value) | 85 | 82 |
| Favorable effect on skin (satisfies (1) and (2) shown above) | ○ | ○ |
| Effect to make skin look beautiful (satisfies (2) and (3) shown above) | ○ | ○ |
| PS value: A: 80 or more; | A | A |
| B: equal to or more than 70 and less than 80; | | |
| C: other | | |
| Tds (Solar radiatio transmittance according to ISO 13837) | 53.0 | 41.6 |

### <Relationship between how favorable skin looks and PS value>

In order to find the relationship between how favorable the skin looks and PS value, experiments shown below were carried out.

Firstly, an artificial solar lamp, glass samples, and a mirror were prepared. Then, the glass sample was placed between the artificial solar lamp and a subject in such a manner that light emitted from the artificial solar lamp is incident on the subject through the glass sample. Regarding the glass sample, four types of glass samples were prepared, a clear glass provided with a green-type film (referred to as "green"), a high heat-ray absorbing green glass (referred to as "UVFL"), a clear glass provided with a pink-type film (referred to as "pink"), and a clear glass provided with a red-type film (referred to as "red").

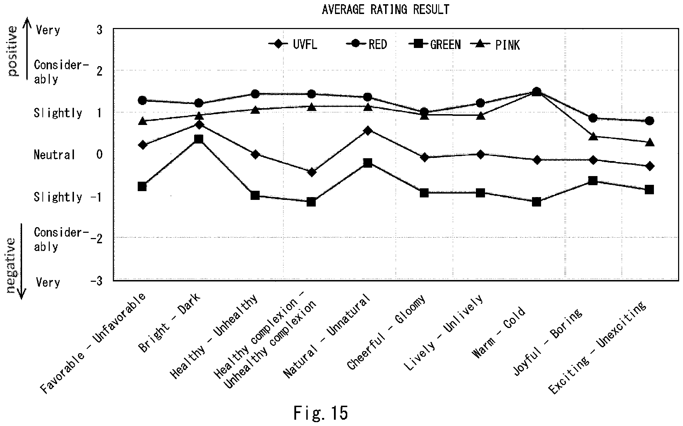

Then, by using an SD method, the impressions of 14 subjects in total, who were in their 20s to 50s, were quantified. Note that the quantification work was carried out by using the four types of glass samples for each subject. For the quantification by the SD method, ten evaluation items, i.e., "Favorable - Unfavorable", "Bright - Dark", "Healthy - Unhealthy", "Having a healthy complexion - Not having a healthy complexion", "Natural - Unnatural", "Cheerful - Gloomy", "Lively -Not lively", "Warm - Cold", "Fun- Not fun", and "Excitement -No excitement", were used. For each evaluation item, the rating was performed using seven levels, i.e., from +3(most favorable) to -3(most unfavorable),. Fig. 15 shows the experimental results of the SD method. In the experimental results shown in Fig. 15, for each evaluation item, numerical values obtained by converting the rating results thereinto are shown. Note that these values are the average values of the rating results of 14 subjects. In the results shown in Fig. 15, a positive trend was shown for both the clear glass provided with the red-type film (red) and the clear glass provided with the pink-type film (pink).

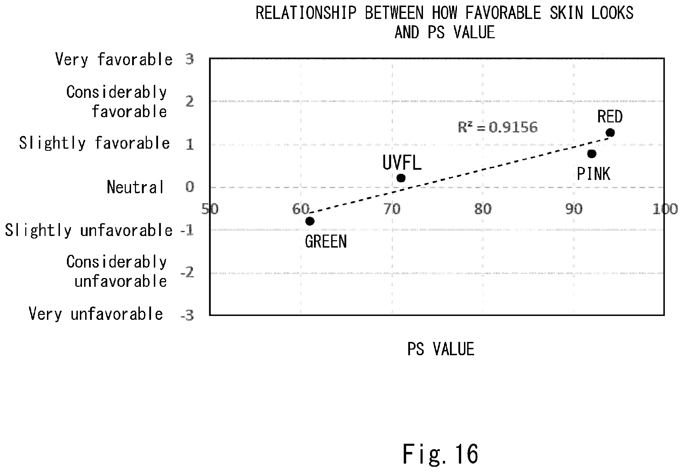

Fig. 16 is a graph showing a relationship between the PS value and how favorable the skin looks. In the graph shown in Fig. 16, for each of the glass samples (green, UVFL, pink, and red), the relationship between the PS value of that glass sample and the rating result thereof is shown. For these rating results, among the aforementioned evaluation items, the rating result (average value) for "Favorable - Unfavorable" was used. As shown in Fig. 16, a correlation coefficient between the PS values of these glass samples and the rating results thereof was obtained, and it was 0.9156. Therefore, it has been found that there is a correlation between the PS value and how favorable the skin looks. Accordingly, it can be said that, as shown in the above-described examples, the method for evaluating how favorable the skin looks using the PS value is reasonable.

### <Effect on Cells>

In order to examine the effects of a vehicle window glass on cells, the experiments described below were carried out, to determine the amounts of procollagen and hyaluronic acid produced per cell.

Firstly, normal human adult dermal fibroblasts (manufactured by KURABO INDUSTRIES LTD., Product No. FC-0024) were subcultured in DMEM (Dulbecco's Modified Eagle Medium: Manufactured by NACALAI TESQUE, INC, Product No.: 08490-05) to which 10% FBS (Fetal Bovine Serum: Manufactured by Cytiva, Product No.: SH30396.03) was added at 37°C under 5% CO₂. Cells, which were seeded in a 35 mm dish at 5×10⁴ cells/dish (2 mL of medium) and cultured for 24 hours, were used for an irradiation test shown below.

A 35-mm dish (containing 2 mL of medium) placed in a CO₂ incubator was taken out and irradiated with light in a clean bench. As the preparation for the irradiation, an artificial solar lamp (manufactured by Seric, SOLAX, XC-500EF) was installed in the clean bench. The cell dish was placed at a fixed position under the artificial solar lamp light source where the irradiation intensity was set to 700 W/m² (which is equivalent to the amount of solar radiation in Tokyo in summer). The position was fixed, and a glass was placed between the artificial solar lamp and the dish, and cells were irradiated with light transmitted through the glass. Regarding the glass, laminated glasses according to Examples 1-5, 2-1, and 2-3 were used. The irradiation times were 5 minutes and 10 minutes. Further, non-irradiated samples which were left in a location in a location in the clean bench where light was not applied for 5 minutes and 10 minutes, were also prepared.

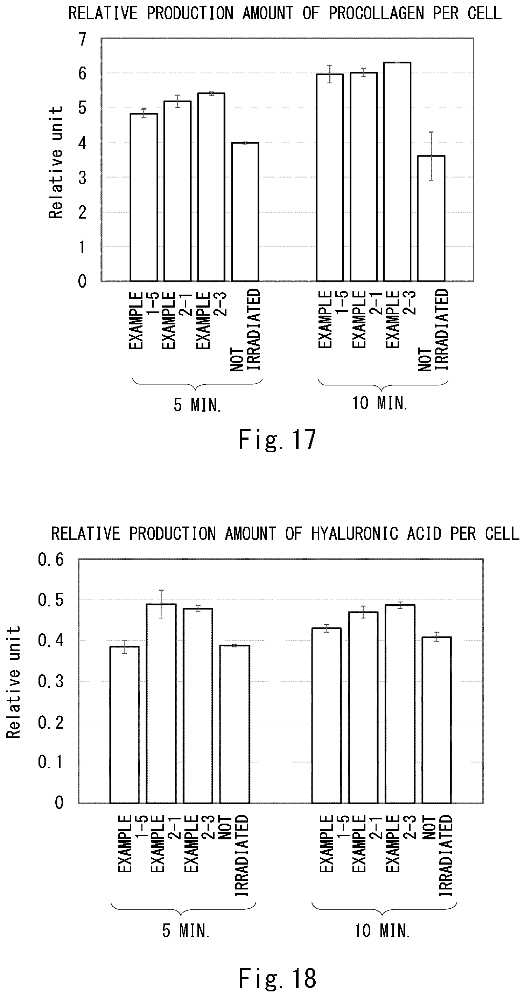

The samples under all of the conditions were collected 72 hours after the end of the irradiation operation. The amounts of procollagen and hyaluronic acid contained in the culture supernatant were determined by measuring the absorbance with a plate reader according to the product manuals using the Human pro-collagen I alpha 1 DuoSet ELISA Kit (manufactured by R&D Systems, Model No.: DY6220-05) and Hyaluronan DuoSet ELISA Kit (manufactured by R&D systems, Model No.: DY3614-05). A calibration curve was generated using the absorbance of serially diluted samples with known concentrations, and the amounts of procollagen and hyaluronic acid in samples with unknown concentration were determined. Then, the remaining medium was completely aspirated and removed, and 1 mL of DMEM containing CCK-8 solution was added, followed by incubation at 37°C for about 2 hours. 100 µL of the culture medium was collected into a 96-well plate. Then, the absorbance at 450 nm was measured using plate reader, and the relative cell numbers were determined. The production amounts of procollagen and hyaluronic acid per cell were calculated based on the results of ELISA (Enzyme-Linked Immunosorbent Assay) and cell count Fig. 17 shows the relative amounts of procollagen produced per cell. Fig. 18 shows the relative amounts of hyaluronic acid produced per cell.

As shown in Fig. 17, the production amounts of procollagen in the samples irradiated with the light that passed through the laminated glass according to Example 1-5, 2-1, or 2-3 tended to increase compared with the production amounts of procollagen in the non-irradiated samples. Further, as shown in Fig. 18, the production amounts of hyaluronic acid in the samples irradiated with the light that passed through the laminated glass according to Example 1-5, 2-1, or 2-3 tended to increase compared with the production amounts of hyaluronic acid in the non-irradiated samples. Therefore, it has been found that each of the laminated glass according to Examples 1-5, 2-1, and 2-3 favorably affects the skin. This result is consistent with the results shown in Tables 1 and 2 (when Requirements (1) and (2) are satisfied).

Although the present invention has been described with reference to the above-described embodiments, the present invention is not limited to the structures of the above-described embodiments, but includes various modifications, corrections, and combinations that can be made by a person skilled in the art within the scope of the invention specified by the claims.

This application is based upon and claims the benefit of priority from Japanese Patent Application 2023-145529 filed on September 7, 2023, the disclosure of which is incorporated herein in its entirety by reference.

### Reference Signs List

1 VEHICLE WINDOW GLASS
11, 31, 41 FIRST GLASS PLATE
12, 32, 42 SECOND GLASS PLATE
13 INTERLAYER
21 COLORED INTERLAYER
22 HEAT-SHIELDING INTERLAYER
23 HEAT-REFLECTIVE COATING
24 COLORED FILM
25 COLORED COATING

## Claims

1. A vehicle window glass, wherein
an average transmittance A in a near-infrared wavelength band from 780 nm to 2,500 nm is 65% or less;
a value B, which is a percentage (b1/b2×100) of b1 with respect to b2, is 50% or more, where b1 is an average transmittance in a visible-light long wavelength band of 650 nm to 750 nm, and b2 is an average transmittance in a visible-light total wavelength band of 380 nm to 780 nm; and
the transmittance has a minimum value in the wavelength band of 500 nm to 600 nm.

2. The vehicle window glass according to claim 1, wherein
the average transmittance A is 30% or less, and
the value B is 90% or more.

3. The vehicle window glass according to claim 1 or 2, wherein an average transmittance in an ultraviolet-light wavelength band shorter than 380 nm is less than 1%.

4. The vehicle window glass according to claim 1 or 2, wherein the average transmittance b1 in the visible-light long wavelength band is 30% or more.

5. The vehicle window glass according to claim 1 or 2, wherein the vehicle window glass is a laminated glass comprising:
a first glass plate;
a second glass plate; and
an interlayer sandwiched between the first glass plate and the second glass plate.

6. The vehicle window glass according to claim 5, wherein the interlayer comprises at least one of a colored interlayer and a heat-shielding interlayer.

7. The vehicle window glass according to claim 5 or 6, further comprising at least one of a heat-reflective coating, a colored coating, and a colored film.

8. The vehicle window glass according to claim 6 or 7, wherein at least one of the first and second glass plates is a colored glass plate or a clear glass plate.

9. The vehicle window glass according to claim 1 or 2, further comprising at least one of a heat-reflective coating, a colored coating, and a colored film.

10. The vehicle window glass according to claim 9, wherein a glass plate constituting the vehicle window glass is a colored glass plate or a clear glass plate.

11. The vehicle window glass according to claim 1 or 2, wherein a PS value, which is an index indicating how favorable the appearance of the skin is, is 70 or more.

12. The vehicle window glass according to claim 1 or 2, wherein a color temperature of light transmitted through the vehicle window glass is from 5,000 K to 8,000 K.

13. The vehicle window glass according to claim 12, wherein a color deviation Duv of light transmitted through the vehicle window glass is 0.010 or less.

14. The vehicle window glass according to claim 1 or 2, wherein a solar-radiation transmittance (Tds) of the vehicle window glass is 70% or less.
